# EUROPÄISCHE PATENTSCHRIFT

(11) **EP 3 868 253 B1**
(45) Veröffentlichungstag und Bekanntmachung des Hinweises auf die Patenterteilung: **09.04.2025**
(21) Anmeldenummer: 21155079.3
(22) Anmeldetag: 03.02.2021
(51) Int. Cl.: A47B 13/02, F16B 12/32, F16B 12/40, F16B 12/52, A47C 4/02, A47B 91/02, A47B 13/06, A47B 47/02, A47C 11/00

(54) **MÖBELSYSTEM**
FURNITURE SYSTEM
SYSTÈME DE MEUBLE

(30) Priorität: 21.02.2020 DE 102020104682
(43) Veröffentlichungstag der Anmeldung: 25.08.2021
(73) Patentinhaber: Kelle-Girse, Sabine, 8500 Porches (PT)
(72) Erfinder: Kelle, Andreas, 8500 Porches (PT)
(74) Vertreter: Beckord & Niedlich Patentanwälte PartG mbB

(56) Entgegenhaltungen:
- DE-A1- 102012 109 975
- DE-U- 1 997 145
- FR-A- 1 416 754
- FR-A2- 2 347 606
- GB-A- 2 539 577
- US-A- 5 289 784

## Beschreibung

Die Erfindung betrifft ein Möbelsystem mit zumindest zwei Seitenteilen, welche lösbar mit zumindest einem Tragelement des Möbelsystems koppelbar sind. Des Weiteren betrifft die Erfindung ein Möbelstück, welches aus einem solchen Möbelsystem aufgebaut ist, eine Möbelgarnitur mit einer Mehrzahl solcher Möbelstücke und ein Verfahren zum Aufbau eines Möbelstücks beziehungsweise die Verwendung eines solchen Möbelsystems zum Aufbau eines Möbelstücks.

Bei manchen Arten von Möbeln ist es vorgesehen, diese mehrfach, z. B. für eine Einlagerung oder einen Transport, in Teile zu zerlegen und wieder aufzubauen. Dies betrifft beispielsweise Möbel für wandernde Ausstellungen, Messen etc., aber insbesondere auch Gartenmöbel, die zur Wintersaison eingelagert und im Frühjahr wieder aufgebaut werden sollen. Dies betrifft vor allem Tische, aber auch Bänke, die im zusammengebauten Zustand meist ein größeres Volumen einnehmen und vielfach auch nur schwer stapelbar sind. Bei derartigen Möbeln sollte die Demontage der Teile beziehungsweise Montage beim Wiederaufbau möglichst einfach und bevorzugt auch ohne Spezialwerkzeuge erfolgen.

Bei Tischen besteht in der Regel das Bedürfnis, die Beine vom Tisch zu trennen. Dies erfolgt bei sehr einfachen Systemen, beispielsweise Plastiktischen, meist dadurch, dass die einzelnen Beine in Stecköffnungen unter der Tischplatte eingesteckt werden können. Der Nachteil dieser Systeme ist aber, dass nach mehrmaligem Auf- und Abbau die Stabilität oft nicht mehr gewährleistet ist. Bei anderen auf dem Markt befindlichen Tischen ist die Möglichkeit gegeben, die Beine einzeln abzuschrauben. Bei einigen Systemen werden dabei die Beine durch Klemmelemente in den Ecken eines Rahmes gehalten, welcher unter der Tischplatte angeordnet ist, wobei meist eine Schraube durch das Ende des jeweiligen Tischbeins hindurch in den Rahmen des Tisches hindurchgeht und im Rahmen festgeschraubt ist. All diese Systeme haben den Nachteil, dass sie sich mit der Zeit lockern können und daher die Schrauben regelmäßig nachgezogen werden müssen, um die Stabilität wiederherzustellen. Außerdem gibt es auf dem Markt Systeme, bei denen die Tischplatte auf zwei Kufen aufliegt, wobei diese Kufen mit mehreren Schrauben mit der Tischplatte verschraubt werden müssen, d. h. zur Zerlegung dieses Tisches ist ein nicht unerheblicher Arbeitsaufwand erforderlich. Die meisten auf dem Markt vorhandenen Stühle und Bänke sind so aufgebaut, dass sie überhaupt nicht für eine schnelle Zerlegung und einen Wiederaufbau vorgesehen sind, sondern sie werden ggf. nur als Bausatz angeliefert und dann mit mehreren Schrauben so zusammengeschraubt, dass sie eigentlich nicht wieder zerlegt werden sollten. Ein Möbelsystem ist in GB2539577A offenbart.

Es ist eine Aufgabe der vorliegenden Erfindung, ein Möbelsystem der eingangs genannten Art sowie ein daraus aufgebautes Möbelstück und ein entsprechendes Verfahren zum Aufbau eines Möbelstücks zu schaffen, welches eine schnelle Kopplung der Seitenteile mit dem Tragelement und ebenso eine schnelle Zerlegung und Wiederkopplung der Teile miteinander erlaubt.

Diese Aufgabe wird durch ein Möbelsystem gemäß Patentanspruch 1, ein Möbelstück gemäß Patentanspruch 13 und ein Verfahren zum Aufbau eines Möbelstücks gemäß Patentanspruch 15 gelöst.

Das erfindungsgemäße Möbelsystem, welches auch als Möbelbausatz bezeichnet werden könnte, weist wie oben beschrieben zumindest zwei Seitenteile auf, welche lösbar mit zumindest einem Tragelement des Möbelsystems koppelbar sind.

Unter einem Tragelement ist hierbei ein Element des Möbelstücks zu verstehen, welches bestimmungsgemäß zum Tragen der Objekte oder Personen dienen soll, wie beispielsweise eine Tischfläche eines Tisches, eine Sitzfläche einer Bank oder eines Stuhls oder ggf. bei einem Regal oder Schrank ein Regalboden beziehungsweise Schrankboden, wobei hierzu auch der oberste Boden, d. h. eine Art Deckplatte etc., zu verstehen ist. Es sei an dieser Stelle darauf hingewiesen, dass ein Tragelement einteilig gebildet sein kann, aber auch aus mehreren Teilen bestehen kann, z. B. einer Unterkonstruktion bzw. einem Tragrahmen oder, wie dies später noch erläutert wird, aus mehreren Holmen und ggf. Querträgern sowie einem geeigneten Deckbelag bzw. einer Deckplatte, welche die eigentliche Oberfläche des Tragelements bildet, auf der dann Gegenstände abgestellt werden oder Personen sitzen können.

Unter "Seitenteilen" sind im Sinne der Erfindung Teile bzw. Elemente des Möbelsystems bzw. Möbelstücks zu verstehen, die wangenartig aufgebaut sein können, aber dabei insbesondere bei Tischen oder Sitzmöbeln wie Bänken, Stühlen oder dergleichen auch offen sein können, wie später noch an einem Beispiel erläutert wird, z. B. als eine Art U-Profil. Diese Seitenteile sind, wie der Name "Seitenteile" bereits sagt, im Wesentlichen seitlich an das jeweilige Tragelement ankoppelbar und fassen dieses vorzugsweise zwischen sich ein, d. h. die Seitenteile befinden sich z. B. bevorzugt jeweils stirnseitig an zwei gegenüberliegenden Seiten des Tragelements. Dabei ist das Seitenteil so aufgebaut, dass es im bestimmungsgemäß aufgebauten und aufgestellten Zustand des Möbelstücks den Bodenkontakt herstellt, also zumindest zwei Beine oder Füße hat. Das Möbelstück besitzt also, anders als dies bei einigen Modellen aus dem oben genannten Stand der Technik der Fall ist, eben nicht einzelne Beine, die jeweils an dem Tragelement, beispielsweise der Tischplatte, befestigt sind, sondern stattdessen die Seitenteile. Aufgrund dieses Aufbaus als ein durchgehendes Seitenteil, welches auf der jeweiligen Seite den Bodenkontakt des aufgebauten Möbels herstellt, ist bereits eine größere Stabilität gewährleistet als bei der Verwendung von einzelnen Beinen.

Erfindungsgemäß sind die Seitenteile so ausgebildet, dass sie jeweils zumindest zwei Steckelemente aufweisen, die jeweils direkt in das Seitenteil integriert sind. "Integriert" heißt in diesem Zusammenhang, dass die Steckelemente bei der Herstellung des Seitenteils so an diesem angeordnet wurden, dass sie dauerhaft mit diesem fest bzw. starr verbunden sind. Z. B. können die Steckelemente in das Seitenteil eingeformt oder an das Seitenteil angeschweißt oder bevorzugt zumindest mit einem Abschnitt in das Seitenteil eingeschweißt sein. Es handelt sich hierbei also nicht um separate Teile, die wiederum mit dem Seitenteil verkoppelt werden müssen.

Weiterhin umfasst das Tragelement erfindungsgemäß an zumindest einer Seite zumindest zwei zu den Steckelementen an den passenden Positionen befindliche Gegensteckelemente, um das Seitenteil mit dem Tragelement zu koppeln. Vorzugsweise sind die Gegensteckelemente ebenfalls in das Tragelement integriert. Auch hier heißt "integriert", dass die Gegensteckelemente dauerhaft mit dem Tragelement fest verbunden sind, z. B. in irgendeiner Weise eingeformt oder an- beziehungsweise in das Tragelement eingeschweißt und nicht separate Teile sind.

Durch den Aufbau des Möbelsystems mit einem Tragelement, welches von zwei Seitenteilen gehalten wird, die seitlich ankoppelbar sind, ergibt sich die Möglichkeit, das jeweilige Möbelstück sehr schnell aufzubauen und wieder auseinanderzunehmen, wobei ein einfacher Steckvorgang ausreicht. Dennoch können - wie dies später noch genauer dargelegt wird - die Elemente außerordentlich stabil in sich gekoppelt werden, sodass auch nach mehrfachem Auf- und Abbau immer noch die gleiche Stabilität der Verbindung gegeben ist und beispielsweise auch ohne ein Nachstellen von irgendwelchen Schrauben sofort stabil steht, was insbesondere bei einem Tisch von großem Vorteil ist. Mit diesem System lassen sich aber vorteilhafterweise nicht nur Tische, sondern auch andere Möbelstücke, wie Sitzmöbel, also z. B. Bänke, Stühle, Hocker, oder andere Möbelstücke wie Regale etc. in gleicher Weise aufbauen. Insbesondere können die Teile so ausgebildet sein, dass die Seitenteile wie später erläutert weitgehend spielfrei mit dem Tragelement koppelbar sind, auch nach mehrfachem Auf- und Abbau des Möbelstücks. Insbesondere hierfür ist es auch von Vorteil, wenn die Steckelemente mit den Seitenteilen und die Gegensteckelemente mit dem Tragelement integrativ hergestellt sind, wodurch sich einfach eine besonders hohe Präzision gewährleisten lässt.

Ein erfindungsgemäßes Möbelstück ist dementsprechend aus dem zuvor beschriebenen Möbelsystem aufgebaut.

Eine erfindungsgemäße Möbelgarnitur, wobei es sich bevorzugt um eine Gartenmöbelgarnitur handelt, weist eine Mehrzahl von entsprechenden Möbelstücken auf, beispielsweise einen Tisch sowie zugehörige Bänke und Stühle. Besonders bevorzugt können dabei beispielsweise Seitenteile von Bänken und Stühlen so aufgebaut sein, dass sie wahlweise ausgetauscht werden können, d. h. dass Seitenteile des Stuhls auch an der Bank verwendet werden können oder umgekehrt.

Bei einem erfindungsgemäßen Verfahren zum Aufbau eines Möbelstücks wird dementsprechend zunächst ein erfindungsgemäßes Möbelsystem bereitgestellt. Es werden dann die zwei Seitenteile des Möbelsystems mit zumindest einem Tragelement des Möbelsystems gekoppelt, wobei jeweils zumindest zwei, vorzugsweise jeweils in das Tragelement integrierte, Steckelemente eines Seitenteils mit, vorzugsweise in das Tragelement integrierten, Steckelementen an einer Seite des Tragelements gekoppelt werden. Wie bereits oben beschrieben, kann dabei das Tragelement von den seitlich angekoppelten Seitenteilen zwischen diesen eingefasst werden.

Durch die Verwendung eines erfindungsgemäßen Möbelsystems zum Aufbau von Möbelstücken werden, wie bereits erwähnt, besonders stabile und dennoch auf einfache Weise beliebig oft in Teile zerlegbare und wieder zusammensteckbare Möbelstücke bereitgestellt.

Weitere, besonders vorteilhafte Ausgestaltungen und Weiterbildungen der durch die Ansprüche definierten Erfindung ergeben sich aus den abhängigen Patentansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Die Abmessungen des Tragelements und der Seitenteile und insbesondere die Lage der Steckelemente und Gegensteckelemente sind vorzugsweise so gewählt, dass bei bestimmungsgemäßer Montage eines Seitenteils an dem Tragelement die Oberseite des Tragelements mit der Oberseite des Seitenteils fluchtet. So wird durch die Seitenteile die Oberfläche des Möbelstücks länger, also z. B. die Tischoberfläche oder die zum Sitzen nutzbare Oberfläche eines Stuhls oder einer Bank, indem das Tragelement, also z. B. die eigentliche Tischplatte oder Sitzfläche, auf beiden Seiten durch die Seitenteile ergänzt bzw. erweitert wird.

Es sei an dieser Stelle zunächst darauf hingewiesen, dass es verschiedene Möglichkeiten gibt, die Steckelemente und Gegensteckelemente auszubilden. Entscheidend ist, dass diese Elemente in irgendeiner Weise ineinander steckbar sind, vorzugsweise die Steckelemente in die Gegensteckelemente, wobei aber auch nicht ausgeschlossen ist, dass die Steckelemente und Gegensteckelemente jeweils zueinander passende, herausragende Elemente und Vertiefungen aufweisen, sodass sie in wechselseitigem Einstecken miteinander verkoppelbar sind (ähnlich einem Nut-Feder-System).

Besonders bevorzugt umfassen die Steckelemente und/oder Gegensteckelemente jeweils Stecklaschen bzw. Verbindungslaschen und/oder Kopplungs- bzw. Einstecköffnungen, wobei die Stecklaschen jeweils in die Einstecköffnungen einsteckbar sind. Besonders bevorzugt sind dabei die Steckelemente als Stecklaschen ausgebildet und die Gegensteckelemente als entsprechende Einstecköffnungen. Ein Stecklasche ist dabei vorzugsweise, da es sich um ein Verbindungsstück in Form einer Lasche handelt, wie üblich aus Flachmaterial bzw. einem Materialstreifen gebildet, beispielsweise einem Flachmetallstreifen, vorzugsweise Flachstahlstreifen.

Bei einer ganz besonders bevorzugten Variante weisen die Seitenteile als Steckelemente jeweils zumindest zwei Stecklaschen auf. Das Tragelement weist dann dementsprechend an zumindest einer Seite, an der das Tragelement mit dem Seitenteil verkoppelt werden soll, zumindest zwei Einstecköffnungen auf, welche die Gegensteckelemente bilden. In diese Einstecköffnungen können dann die Stecklaschen eingesteckt werden, um das Seitenteil mit dem Tragelement zu koppeln. Die Einstecköffnungen können dabei besonders bevorzugt in Form von Hohlrohren ausgebildet sein, wie dies später noch detaillierter erläutert wird.

Grundsätzlich könnte aber auch umgekehrt das Tragelement zumindest an einer Seite zumindest zwei Stecklaschen bzw. Verbindungslaschen aufweisen und die Seitenteile weisen dementsprechend zwei Einstecköffnungen auf.

Ebenso wäre es auch möglich, dass jedes der beiden Teile, d. h. das Seitenteil und das Tragelement, jeweils sowohl eine Anzahl von Stecklaschen (die auch als Einstecklaschen bezeichnet werden könnten) und entsprechend eine oder mehrere Einstecköffnungen aufweisen, die so zueinander passend liegen, dass bei der für die Montage bestimmungsgemäßen Orientierung des Tragelements zum Seitenteil jeweils die Stecklasche des einen Teils in eine dieser Stecklasche zugeordnete Einstecköffnung des anderen Teils passend eingesteckt werden kann.

Vorzugsweise ist zumindest jeweils ein Teil einer Innenkontur der Einstecköffnung, insbesondere der besagten Hohlrohre, jeweils an zumindest ein Teil der Außenkonturen eines Steckelements, insbesondere einer Stecklasche, so angepasst und die Positionen und Orientierung der Steckelemente und der Einstecköffnung sind so zueinander gewählt, dass die Steckelemente passend in die Einstecköffnung einsteckbar sind.

Dabei ist es natürlich möglich, dass die Innenkonturen der Einstecköffnungen jeweils umlaufend an die Steckelemente angepasst sind. Prinzipiell reicht es aber aus, wenn die Anpassung von Innenkontur der Einstecköffnungen und Außenkontur der Steckelemente nur so weit (also z.B. nur in einem Abschnitt bzw. Bereich entlang der Konturen) gegeben ist, dass insgesamt durch die Positionierung, insbesondere Beabstandung, der Steckelemente zueinander und der Einstecköffnungen zueinander das Seitenteil am Tragelement in genau einer exakt, gut sitzenden Position möglichst spielfrei eingesteckt werden kann. Vorzugsweise beträgt das Spiel weniger als 0,2 mm.

Hierzu würde es insbesondere ausreichen, wenn dafür gesorgt wird, dass in allen vier Raumrichtungen zumindest eine beliebige Seite bzw. eine Oberfläche der insgesamt an der Verbindung mitwirkenden Steckelemente (insbesondere der Stecklaschen) und der mitwirkenden Einstecköffnungen (insbesondere der Hohlrohre) im eingesteckten Zustand passend voreinander liegen. D.h. es können z. B. jeweils von zwei in einer ersten Richtung voneinander beabstandeten Stecklaschen nur die beiden voneinander weg weisenden Außenflächen jeweils an einer Innenseite einer Einstecköffnung anliegen, um eine relative Bewegung der verkoppelten Teile zueinander in dieser ersten Richtung zu verhindern.

Auch wenn durch einen solchen Steckmechanismus sichergestellt werden kann, dass die Seitenteile am Tragelement bereits nach dem Einstecken spielfrei sitzen und das Möbelstück nicht in sich instabil ist oder wackelt, kann es vorteilhaft sein, zusätzliche Fixierungselemente vorzusehen. D. h. vorzugsweise können die Steckmittel und/oder Gegensteckmittel auch Fixierungselemente aufweisen, vorzugsweise Klemmelemente, um die Steckmittel und/oder Gegensteckmittel lösbar miteinander zu fixieren, bevorzugt festzuklemmen.

Besonders bevorzugt könnten hierzu an den Einstecköffnungen Fixierungselemente angeordnet sein, um die Steckelemente in den Einstecköffnungen lösbar zu fixieren. Dabei handelt es sich bevorzugt um Klemmelemente, um die Steckelemente in den Einstecköffnungen zusätzlich festzuklemmen. Werden beispielsweise die Einstecköffnungen in der bevorzugten Variation durch einfache Hohlrohre realisiert und die Fixierungselemente als Stecklaschen, könnten beispielsweise bevorzugt Klemmschrauben genutzt werden, die von der Seite her in Gewindebohrungen der Hohlrohre eingeschraubt werden, so dass sie stirnseitig im Inneren der Hohlrohre gegen die eingesteckte Stecklasche gedrückt werden, um diese im Hohlrohr festzuklemmen. Auch dies wird später noch anhand eines Ausführungsbeispiels gezeigt.

Grundsätzlich sind aber auch andere Verstiftungen oder Verschraubungen zwischen einem Hohlrohr und einer Stecklasche oder dergleichen möglich.

Für die Ausbildung des Tragelements gibt es, wie bereits eingangs erwähnt, verschiedene Möglichkeiten. Erfindungsgemäß umfasst das Tragelement zumindest zwei Längsholme sowie einen Deckbelag (also z. B. eine Tischplatte oder Sitzfläche) und/oder Querstreben, welche die Längsholme miteinander verbinden. Die Verbindung zwischen den Längsholmen kann dabei auch durch den Deckbelag erfolgen, d. h. indem der Belag beispielsweise mit den Querstreben und zusätzlich mit den Längsholmen verbunden ist.

Bei einem Deckbelag kann es sich grundsätzlich um eine durchgehende Deckplatte aus beliebigem Material handeln, beispielsweise Holz, Naturstein, Kunststein, Kunststoff, Metall, Glas oder auch einer Kombination verschiedener Materialien. Insbesondere bei Gartentischen und Sitzmöbeln kann es auch vorteilhaft sein, anstatt eines durchgehenden Deckbelags einen panelartigen Belag zu verwenden, d. h. eine "Tischplatte" oder "Sitzfläche" aus mehreren - insbesondere voneinander beabstandeten - Holzpanelen oder dergleichen wie dies häufig bei Gartenmöbeln der Fall ist.

Besonders bevorzugt weisen die Längsholme des Tragelements an zumindest einer Stirnseite, besonders bevorzugt an beiden Stirnseiten, jeweils eine der Einstecköffnungen auf. Beispielsweise können die Längsrohre Hohlrohre umfassen bzw. einfach aus Hohlrohren gebildet sein. In diesem Fall können die stirnseitigen Enden der Hohlrohre gleichzeitig die Einstecköffnungen bilden, wie dies oben bereits beschrieben ist.

Bei dieser bevorzugten Variante würde es im einfachsten Fall also ausreichen, an einem Tragelement in Form einer durchgehenden Deckplatte untenseitig zwei Längsholme in Form von Hohlrohren zu befestigen, um ein Tragelement zu erhalten, welches an jeder Stirnseite zwei Einstecköffnungen aufweist, in die dann die Steckelemente am Seitenteil, insbesondere die bereits erwähnten Stecklaschen, eingesteckt werden können.

Auch für die Ausgestaltung der Seitenteile gibt es verschiedene Möglichkeiten:
Bevorzugt sind die Seitenteile so ausgebildet, dass sie jeweils zwei höhenverstellbare Beine umfassen. Durch die Höhenverstellbarkeit der Beine ist es möglich, Unebenheiten am Boden, auf welchem das jeweilige Möbelstück aufgestellt werden soll, auf einfache Weise auszugleichen. Die Verwendung von Seitenteilen mit zwei höhenverstellbaren Beinen hat den Vorteil, dass jedes der Beine höhenverstellbar ist und nicht, wie das bei anderen Tischen der Fall ist, unter Umständen nur ein Bein eine geringe Höhenverstellung aufweist, um Unebenheiten auszugleichen. Je nach Bedarf des Nutzers kann so die Höhe des Möbelstücks verändert werden, was insbesondere bei Tischen und Bänken vorteilhaft ist. Der Benutzer kann dann das Möbelstück an seine Körpergröße anpassen. Diese Idee, die Seitenteile mit höhenverstellbaren Beinen auszustatten, ist daher auch unabhängig von der Art der Kopplung der Seitenteile an das Tragelement vorteilhaft und kann folglich auch als eigenständige Idee gesehen werden, auch wenn natürlich die größten Vorteile in einer Synergie der beiden Ideen erreicht werden.

Besonders bevorzugt können die Beine hierzu jeweils ein Teleskoprohr umfassen. Die Verwendung von Teleskoprohren hat den Vorteil, dass hierdurch sehr weite Höhenverstellungen ohne großen Aufwand realisierbar sind. Hierzu müssen lediglich geeignet lange Bein-Hohlrohre und geeignet lange Fußteile, beispielsweise entsprechende Fuß-Rohre, eingesetzt werden, um entsprechend große Verstellbereiche zuzulassen.

Besonders bevorzugt sind die höhenverstellbaren Beine so ausgebildet, dass sie um mindestens 8 cm, ganz besonders bevorzugt um ca. 10 cm, in der Höhe verstellbar sind. Besonders bevorzugt lässt sich eine Tischhöhe (Oberkante der Tischplatte) zwischen 70 cm minimal und 90 cm maximal einstellen. Ganz besonders bevorzugt ist eine Verstellung zwischen ca. 78 cm im untersten Zustand und ca. 88 cm im obersten Zustand möglich.

Ganz besonders bevorzugt umfassen dabei die Beine ein oberes Bein-Hohlrohr und ein darin verschiebbar geführtes und in verschiedenen Schiebe- bzw. Höhenpositionen relativ zum Bein-Hohlrohr fixierbares, insbesondere festklemmbares, unteres Fußteil. Grundsätzlich wäre es natürlich auch möglich, das Fußteil als größeres Hohlrohr mit größerem Durchmesser auszubilden und den oberen Teil in diesem inneren Teil verschiebbar geführt und festklemmbar anzuordnen. Jedoch ist die umgekehrte, zuerst genannte Variante aus optischen Gründen und auch aus Gründen der geringen Verschmutzungsanfälligkeit bevorzugt.

Eine Höhenverstellbarkeit mit Hilfe von Teleskoprohren hat zudem den Vorteil, dass die Beine erheblich einfacher und schneller auf die gewünschte Länge gebracht werden können und auch passend auf der Standoberfläche als Ausgleich von deren eventuellen Unebenheiten angeordnet werden können. Hierzu könnte beispielsweise das fertig montierte Möbelstück mit seinem Tragelement, beispielsweise ein Tisch mit seiner Tischfläche, auf einem geeigneten Bock zunächst vorübergehend in der gewünschten Höhe aufgebockt werden. Anschließend kann die Fixierung bzw. Verklemmung der Fußteile an den Teleskoprohren gelöst werden, wobei dann die Fußteile aus den Bein-Hohlrohren automatisch durch ihr Eigengewicht auf die passende Länge ausfahren. Es ist dann lediglich erforderlich, die Fixierung bzw. Klemmung wieder anzuziehen, und nach Entfernung des Bocks steht das jeweilige Möbelstück passend ausgerichtet an der gewünschten Stelle und weist die gewünschte Höhe auf.

Soll ein Möbelstück, beispielsweise ein Tisch, dessen Höhe bereits einmal eingestellt wurde, an einen anderen Platz gebracht werden, an dem eine andere Bodenbeschaffenheit und andere Bodenunebenheiten vorliegen, kann wieder relativ einfach eine Ausrichtung der Tischoberfläche erfolgen, indem auf der Oberfläche des jeweiligen Möbelstücks an der gegenüberliegenden Ecke des zu verstellenden Beins ein Gewicht aufgelegt wird (indem sich beispielsweise eine Person daraufsetzt) und am jeweiligen zu verstellenden Bein die Fixierung bzw. Klemmung gelöst wird, wodurch das Bein dann automatisch in die Endposition ausfährt. In dieser kann es dann wieder fixiert bzw. festgeklemmt werden und anschließend kann wieder das Gewicht von der Tischplatte entfernt werden.

Für die weitere konkrete Ausbildung der Teleskoprohre gibt es auch verschiedene Möglichkeiten. So wäre es z. B. möglich, die Fußteile jeweils als Stangenmaterial auszubilden, d. h. nicht als hohles Material. Allerdings ist mit hohlem Material eine entsprechende Materialersparnis verbunden und auch das Gewicht des Seitenteils und des gesamten Möbelstücks kann so reduziert werden.

Bezüglich der Form der Teleskoprohre ist es möglich, die Bein-Hohlrohre und die Fußteile als Rundrohre auszubilden. Besonders bevorzugt sind jedoch die Bein-Hohlrohre und die Fußteile jeweils als Vierkant-Rohre ausgebildet, besonders bevorzugt mit einem rechteckigen Querschnitt.

Unabhängig von der Form, aber besonders bevorzugt bei solchen Vierkant-Rohren, sind die Außenmaße der Fußteile zumindest derart kleiner als die Innenmaße der Bein-Hohlrohre, dass die Fußteile mittels eines Abstandselements jeweils in einem Abstand zu den Innenwänden der Bein-Hohlrohre geführt werden. Dabei ist das Abstandselement bevorzugt so gewählt, dass der Abstand zwischen der Außenwand des Fußteils und der Innenwand des Bein-Hohlrohrs allseits im Wesentlichen identisch ist.

Sofern, wie erwähnt, die Bein-Hohlrohre und die Fußteile jeweils in der bevorzugten Variante als Vierkant-Rohre ausgebildet sind, kann das Abstandselement eine einfache Abstandsplatte umfassen bzw. aus dieser im Wesentlichen gebildet sein. Diese Abstandsplatte kann eine Dicke aufweisen, welche dem gewünschten Abstand der Außenwand des jeweiligen Fußteils zu den Innenwänden des Bein-Hohlrohres entspricht, und braucht dann nur an einer Seite zwischen Fußteil und Bein-Hohlrohr angeordnet zu werden.

Um das Fußteil im Bein-Hohlrohr zu führen und an der gewünschten Höhe zu fixieren, befindet sich bevorzugt im Inneren des Fußteils eine Klemmplatte, die mittels von außen betätigbarer Schraubelemente gegen das Fußteil gedrückt bzw. gezogen werden kann, so dass dieses zwischen Klemmplatte und Bein-Hohlrohr eingeklemmt werden kann.

Z B. kann das Fußteil einen in Längsrichtung des Fußteils bzw. Bein-Hohlrohrs verlaufenden Schlitz aufweisen. Die Klemmplatte kann dabei mit zumindest Klemmschrauben oder dergleichen verbunden sein, die endseitig mit ihrem Gewinde in entsprechende Gewindelöcher der Klemmplatte eingeschraubt sind, wobei die beiden Klemmschrauben auch in der Längsrichtung des Fußteils übereinander liegen und so angeordnet sind, dass sie nach außen durch den Schlitz aus dem Fußteil herausragen. Das Bein-Hohlrohr weist entsprechend an den passenden Stellen zumindest zwei Durchgangslöcher auf, durch die diese Klemmschrauben wiederum aus dem Bein-Hohlrohr herausragen, so dass sie von dort fest angezogen werden können, um die Klemmplatte gegen das Fußteil zu ziehen. Wird wie zuvor beschrieben ein Abstandselement in Form einer Abstandsplatte genutzt, kann diese Abstandsplatte durch die Schrauben fixiert werden, indem die jeweiligen Klemmschrauben auch durch entsprechende Durchgangslöcher in der Abstandsplatte hindurchgehen. Besonders bevorzugt werden für jedes Bein zwei Schraubelemente, insbesondere zwei Klemmschrauben, eingesetzt, um so ein Verkanten des Fußteils innerhalb des Bein-Hohlrohrs zu verhindern.

Die zuvor beschriebene Ausgestaltung ist mechanisch relativ einfach und umfasst nur wenige Teile, sodass sie zum einen sehr stabil und zum anderen auch kostengünstig ist. Die Beabstandung des Fußteils zum Bein-Hohlrohr hat den Vorteil, dass die Fußelemente, sobald die Verklemmung gelöst ist, sehr leicht gegenüber den Bein-Hohlrohren laufen, d. h. die Höhenverstellung einfach wie oben beschrieben durch das Eigengewicht der Fußteile realisiert werden kann, da diese Fußteile dann beispielsweise im bevorzugten Fall nur auf der Abstandsplatte anliegen und ansonsten durch die Klemmschrauben geführt werden, wie dies unten noch an einem Ausführungsbeispiel genauer gezeigt wird. Besonders bevorzugt weist das Seitenteil ein nach unten offenes U-förmiges Rohrprofil auf. Ganz besonders bevorzugt besteht ein Seitenteil im Wesentlichen (z. B. abgesehen von den bereits erwähnten Fußteilen) aus einem solchen U-förmigen Rohrprofil.

Die U-Schenkel können beispielsweise bei einem Tisch oder Sitzmöbel die Beine bilden, vorzugsweise die Bein-Hohlrohre, in denen die Fußteile beweglich gelagert sind.

Ein solches U-förmiges Rohrprofil hat den Vorteil, dass einerseits stabile Seitenteile mit jeweils zwei zusammenhängenden Beinen gegeben sind und dadurch, wie eingangs ausgeführt, die gewünschte Stabilität des Möbelstücks besonders einfach erreicht werden kann. Zum anderen wird hierdurch gewährleistet, dass zwischen den Beinen jeweils ausreichend Freiraum besteht, was insbesondere bei Tischen von Vorteil ist, da so die Nutzer des Tisches relativ viel Beinfreiheit haben.

Das U-förmige Rohrprofil ist ganz besonders bevorzugt ein Metallrohrprofil. Beispielsweise kann es aus zumindest drei Vierkant-Rohren gefertigt werden, welche vorzugsweise in den Ecken des "U" jeweils miteinander verschweißt worden sind.

Vorteilhafterweise können die Steckelemente, besonders bevorzugt die Stecklaschen, so am Seitenteil angeordnet sein, dass sie senkrecht zu einer Ebene stehen, in welcher sich das U-förmige Rohrprofil erstreckt. Mit anderen Worten, wenn diese Ebene, in welcher das U-förmige Rohrprofil liegt, als U-Ebene bezeichnet wird, dann stehen die Steckelemente, insbesondere die Stecklaschen, senkrecht auf dieser U-Ebene. Besonders bevorzugt ist dabei auch die Toleranz der Abweichung hinsichtlich des Winkels zwischen Stecklaschen und der U-Ebene minimal. Besonders bevorzugt beträgt die Abweichung vom rechten Winkel weniger als +/- 2°.

Ganz besonders bevorzugt befinden sich die Steckelemente jeweils im Bereich der Ecken des U-förmigen Rohrprofils, indem zum Beispiel die einzelnen Rohre zur Bildung des U-Profils miteinander verbunden sind.

Wie bereits oben erwähnt, ist es vorgesehen, dass die Steckelemente integrativ mit den Seitenteilen gefertigt sind. Besonders bevorzugt sind die Steckelemente, insbesondere Stecklaschen, mit den Seitenteilen verschweißt. Besonders bevorzugt können die Steckelemente, beziehungsweise Stecklaschen mit einem Abschnitt in das Seitenteil eingeschweißt sein. So könnten beispielsweise die Stecklaschen jeweils als im Querschnitt rechteckige Laschen ausgebildet sein, welche aus dem Seitenteil herausragen.

Die Stecklaschen können (insbesondere in gerader Verlängerung des Abschnitts, welcher jeweils aus dem Seitenteil herausragt) sich in das Seitenteil hinein erstrecken, besonders bevorzugt innerhalb des U-Rohrs quer durch dieses hindurch erstrecken. Die Stecklaschen können dann jeweils an der Wand des U-Rohrs, an dem sie aus dem Seitenteil herausragen, mit der Wand verschweißt werden und ebenso mit der gegenüberliegenden Wand des U-Rohrs. Auch dies wird später noch an einem Ausführungsbeispiel erläutert.

Auf diese Weise ist eine besonders geringe Toleranz hinsichtlich der oben genannten Winkelabweichung möglich. Dabei befinden sich die Steckelemente, insbesondere Stecklaschen, bevorzugt in jeweils einem oberen Eckbereich der Seitenteile, beispielsweise innerhalb eines Eckbereichs des U-Profils des Seitenteils, in dem ein U-Schenkel an den U-Querbalken angrenzt.

Neben dem Tragelement und den Seitenteilen kann das Möbelsystem auch bevorzugt Verbindungelemente zur Verbindung zweier Tragelemente umfassen.

Bevorzugt kann ein Verbindungelement zumindest ein Mittelteil aufweisen oder aus diesem gebildet sein, welches auf zwei gegenüberliegenden Seiten Steckelemente, insbesondere Stecklaschen aufweist, die jeweils zur Kopplung mit einem Tragelement dienen können. Mit einem solchen Mittelteil können mehrere Tragelemente untereinander gekoppelt werden und so kann beispielsweise ein Möbelstück realisiert werden, welches ein verlängertes Tragelement aufweist, beispielsweise ein Tisch mit doppelter Länge.

Das Mittelteil kann vorzugsweise auch Beine aufweisen. Besonders bevorzugt kann es im Wesentlichen wie ein Seitenteil aufgebaut sein, mit dem Unterschied, dass es auf beiden gegenüberliegenden Seiten Steckelemente, insbesondere Stecklaschen, aufweist. In diesem Fall können die Stecklaschen beispielsweise besonders bevorzugt auch quer durch das U-Rohr hindurchragen und jeweils an ihren Durchtritt durch die Seitenwände des Rohrs mit diesem verschweißt sein.

Zusätzlich oder alternativ kann das Möbelsystem auch einfache einzelne Verbindungselemente zur Verbindung zweier Tragelemente aufweisen, beispielsweise in Form von Verbindungssteckelementen, besonders bevorzugt in Form von Verbindungs-Stecklaschen.

Hierzu könnten beispielsweise Stecklaschen verwendet werden, die ungefähr doppelt so lang sind wie der aus den Seitenteilen herausragende Abschnitt der Stecklaschen. Es könnten dann die Stecklaschen zur Verbindung zweier Tragelemente in den Einstecköffnungen eines ersten der Tragelemente positioniert und beispielsweise mit den Fixierelementen an der jeweiligen Einstecköffnung, insbesondere den Klemmschrauben in einem Hohlrohr des Längsholms, fixiert werden. Dann kann dieses erste Tragelement mit den bereits darin fixierten Verbindungs-Stecklaschen mit einem weiteren, zweiten Tragelement gekoppelt werden, indem die freien Enden der im ersten Tragelement fixierten Stecklaschen in die Einstecköffnungen des zweiten Tragelements eingeschoben werden und dort z. B. in gleicher Weise, beispielsweise auch mit Hilfe von Klemmschrauben oder dergleichen, fixiert werden.

Wie bereits erwähnt, kann das Möbelstück, welches aus dem Möbelsystem aufgebaut werden soll, insbesondere ein Sitzmöbel sein, also beispielsweise eine Bank oder ein Stuhl bzw. ein Hocker.

Vorzugsweise kann das Möbelsystem daher auch eine, vorzugsweise leicht ankoppelbare und wieder abkoppelbare, Rückenlehne umfassen. Bevorzugt kann die Rückenlehne zumindest am Tragelement lösbar ankoppelbar sein. Alternativ oder zusätzlich wäre es auch möglich, die Rückenlehne mit geeigneten Koppelelementen an den Seitenteilen lösbar zu fixieren.

Die Rückenlehne kann bevorzugt eine Lehnfläche aufweisen und zumindest zwei Querstreben, welche sich an einem Ende jeweils über die Lehnfläche hinaus erstrecken und ein Kopplungselement zur Kopplung mit einem Tragelement des Möbelsystems aufweisen. Die Lehnfläche muss dabei nicht einteilig sein, sondern es ist auch möglich, diese (wie beispielsweise die Tischplatte des oben erwähnten Gartentisches) aus einzelnen Holzpanelen zu fertigen, die mit den Querstreben verbunden werden.

Die Kopplungselemente könnten dabei besonders bevorzugt zur Kopplung mit einem Längsholm eines Tragelements vorgesehen sein. Zum Beispiel könnten sie ein Greifelement, insbesondere in Form eines U-förmigen Profils, aufweisen, um den Längsholm zu umgreifen. Besonders bevorzugt sind dabei die Kopplungselemente so ausgebildet, dass sie den Längsholm von unten (also von der vom Deckbelag des Tragelements weg weisenden Seite) umgreifen. Ganz besonders bevorzugt kann das Greifelement, insbesondere U-Profil, am Längsholm festgeklemmt und/oder festgeschraubt werden. Sofern ein Festschrauben erfolgt, können die Löcher auch mit Blindschrauben geschlossen werden, wenn am jeweiligen Möbelstück keine Rückenlehne befestigt werden soll, beispielsweise bei einem Hocker, d.h. ein Hocker unterscheidet sich von einem Stuhl dann lediglich dadurch, ob die Rückenlehne montiert ist oder nicht. Insofern lässt sich jederzeit ein Hocker auch zu einem Stuhl umrüsten.

Des Weiteren kann ein Möbelsystem auch bevorzugt zumindest eine am Tragelement lösbar ankoppelbare Reling umfassen. Auch eine solche Reling kann beispielsweise lösbar an den Längsholmen des Tragelements befestigt werden. Eine solche Reling hat beispielsweise an den beiden Längsseiten eines Tisches besondere Vorteile, da mit Hilfe dieser Reling der Tisch schnell an eine andere Stelle gehoben werden kann. Ebenso kann sie zur Abstützung der Arme dienen, wenn man länger am Tisch sitzt.

Zur Herstellung der verschiedenen Teile des Möbelsystems können verschiedene Materialien genutzt werden.

Wie bereits erwähnt, sind die Seitenteile besonders bevorzugt aus Metall, insbesondere Metallrohren, hergestellt. Metallseitenteile weisen eine große Stabilität auf und sind bei entsprechender Dicke des Metallmaterials im Normalfall nahezu unzerstörbar.

Insbesondere, wenn solche Möbel im Außenbereich eingesetzt werden sollen, also beispielsweise als Gartenmöbel, bietet es sich an, rostfreien Stahl zu verwenden. Alternativ oder zusätzlich können die Teile auch pulverbeschichtet sein, um die Metallelemente rostfrei zu machen. Solche pulverbeschichteten Metallteile besitzen eine hohe Kratzfestigkeit, eine angenehme Haptik und auch die Umweltverträglichkeit der Möbelstücke ist hoch, weil die Pulverbeschichtung lösungsmittelfrei erfolgen kann. Sowohl Metallteile aus rostfreiem Edelstahl als auch pulverbeschichtete Metallelemente sind im Wesentlichen wetterbeständig.

Sofern für die Deckfläche des Tragelements Holzteile verwendet werden, wird besonderes bevorzugt hochdichtes Holz verwendet, um auch hier eine ausreichende Wetterbe**ständigkeit** zu gewährleisten. Besonders bevorzugt sind Hölzer wie Iroko bzw. Kambala. Es sind aber auch sehr gut speziell behandelte Hölzer einsetzbar, wobei zum Beispiel das Holz accoya ^{®} bevorzugt ist.

Alle unterschiedlichen Materialien sind vorzugsweise durch einfache Weise voneinander trennbar, um ihren Austausch oder ihre Aufbereitung zu ermöglichen.

So könnten beispielsweise die Holme oder Querstreben etc. des Tragelements an den jeweiligen Holzteilen mit Schrauben befestigt sein, wobei die Schrauben wiederum in Gewindeeinsätze, insbesondere Einschraubmuttern (z. B. sogenannte RAMPA-Muttern oder RAMPA-Muffen), eingeschraubt werden, die in die Holzelemente eingebracht sind. Dies ermöglicht ein besonders leichtes Abschrauben der Teile voneinander, wobei sichergestellt werden kann, dass auch nach mehrfachem An- und Abschrauben die Verschraubung noch funktioniert und die Einzelteile wiederverwendet werden können.

Damit ist es beispielsweise möglich, nach einigen Jahren die Holzelemente und die Metallelemente getrennt voneinander zu überarbeiten, um eventuelle Gebrauchsspuren zu beseitigen. Das jeweilige Möbel ist also insgesamt nicht nur auch bei mehrfachem An- und Abbau in die großen Einzelteile in sich stabil, sondern insgesamt so konstruiert, dass alle Teile (auch die einzelnen Panels bzw. Bretter eines Deckbelags oder einer Rückenlehne) einzeln ausgetauscht oder überarbeitet werden können, um so ein besonders nachhaltiges Produkt mit langer Haltbarkeit zu gewährleisten.

Dies ist besonders dann vorteilhaft, wenn es sich um Möbel für den Außenbereich handelt, wie die bereits genannten Gartenmöbel. Bevorzugt werden daher mit dem Erfindungsgemäßen Möbelsystem Tische, insbesondere Gartentische, und Sitzmöbel wie Bänke, insbesondere Gartenbänke, Stühle oder Hocker, insbesondere Gartenstühle oder -hocker hergestellt. Dabei können die Seitenteile der Sitzmöbel jeweils identisch aufgebaut sein, d. h. Bank und Stuhl bzw. Hocker unterscheiden sich im Prinzip zunächst nur durch die Länge des Tragelements zwischen den Seitenteilen und die eventuell vorhandene Länge der Rückenlehne.

Ebenso können, insbesondere auch für den Außenbereich (beispielswiese den Garten oder die Terrasse), Regale oder Schränke mit einem erfindungsgemäßen Möbelsystem hergestellt werden.

Bei einem Regal oder Sideboard könnten beispielsweise die oberste Deckplatte und gegebenenfalls noch ein unterster Boden nach Art der erfindungsgemäßen Tragelemente ausgebildet sein, die in der erfindungsgemäßen Weise mit den Seitenteilen verbunden sind. Die Seitenteile können dann ganz ähnlich wie die Seitenteile der Sitzmöbel ausgebildet sein, nur dass sie insgesamt höher sind, nämlich die Höhe aufweisen, die das Regal bzw. Sideboard aufweisen soll. Insbesondere können die Seitenteile auch wieder als nach unten offene U-förmige Rohrprofile, bevorzugt auch mit höhenverstellbaren Fußteilen, ausgebildet sein.

Diese Seitenteile könnten dann zum einen jeweils in den oberen Eckbereichen für die oberste Deckplatte zumindest zwei Steckelemente, insbesondere Stecklaschen, aufweisen und zusätzlich entsprechende Steckelemente, insbesondere Stecklaschen, in einem unteren Bereich für beispielsweise den untersten Boden.

Weiterhin könnten Zwischenböden an den Seitenelementen lösbar fixiert werden, wobei dies auch durch entsprechende Steckelemente in den gewünschten Höhen an den Seitenteilen realisierbar ist oder durch Festklemmen oder Festschrauben der Zwischenböden in dafür vorgesehenen Löchern an den Seitenteilen.

Ein Schrank könnte in ähnlicher Weise aufgebaut sein, wobei dann zusätzlich an den Seitenteilen an der Vorderseite Scharniere angeordnet sind, um daran Türen für den Schrank zu befestigen, und auf der Rückseite kann der Schrank durch eine Rückwand geschlossen sein, die an den Seitenteilen und oder den Tragelementen befestigt ist.

Dabei können bevorzugt die Scharniere für die Türen und/oder die Rückwand, ähnlich wie dies bereits für die Rückenlehne beschrieben wurde, an den Seitenteilen und/oder den Tragelementen auch lösbar gekoppelt sein.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Es zeigen:
Figur 1 eine perspektivische Ansicht auf ein Ausführungsbeispiel einer erfindungsgemäßen Möbelgarnitur mit einem Tisch, zwei Bänken und zwei Stühlen,
Figur 2 eine perspektivische Ansicht auf den Tisch der Möbelgarnitur aus Figur 1,
Figur 3 eine vergrößerte perspektivische Teilansicht der Tischplatte und eines Seitenteils des Tisches aus Figur 2 im entkoppelten Zustand,
Figur 4 eine perspektivische Ansicht auf das Seitenteil gemäß Figur 3,
Figur 5 eine Unteransicht auf die Tischplatte des Tisches aus Figur 2,
Figur 6 eine vergrößerte perspektivische Unteransicht auf einen Eckbereich der Tischplatte mit angekoppelten Seitenteil des Tisches gemäß Figur 1, hier mit teilweise transparenter Darstellung der Verbindung der Tischplatte mit dem Seitenteil,
Figur 7 einen Schnitt durch den in Figur 6 dargestellten Eckbereich der Tischplatte mit dem angekoppelten Seitenteil,
Figur 8 eine perspektivische Ansicht mit teilweise transparenter Darstellung des Ausführungsbeispiels eines Bein-Hohlrohrs mit darin angeordnetem Fußteil des Seitenteils gemäß Figur 4,
Figur 9 einen Schnitt durch das Bein-Hohlrohr gemäß Figur 8 mit darin angeordnetem Fußteil,
Figur 10 eine perspektivische Ansicht des Fußteils mit der Abstandsplatte aus Figur 4,
Figur 11 eine perspektivische Ansicht auf einen der Stühle der Möbelgarnitur aus Figur 1,
Figur 12 eine perspektivische Unteransicht auf den Stuhl gemäß Figur 11 mit einem entkoppelten Seitenteil,
Figur 13 eine perspektivische Unteransicht auf einen Eckbereich des Stuhls gemäß Figur 11 zur Darstellung der Ankopplung der Rückenlehne,
Figur 14 eine perspektivische Ansicht auf einen Abschnitt einer Rückenlehne einer Bank der Möbelgarnitur aus Figur 1,
Figur 15 eine perspektivische Ansicht auf eine Bank der Möbelgarnitur aus Figur 1,
Figur 16 eine perspektivische Ansicht eines Ausführungsbeispiels für ein Mittelteil,
Figur 17 eine perspektivische Ansicht auf die mittels eines Mittelteils gemäß Figur 16 erweiterten Längsholme und die Seitenteile eines Möbelstücks,
Figur 18 eine perspektivische, teilweise transparente Darstellung eines Ausführungsbeispiels einer Verbindung zweier Längsholme mit Hilfe von Verbindungs-Stecklaschen.

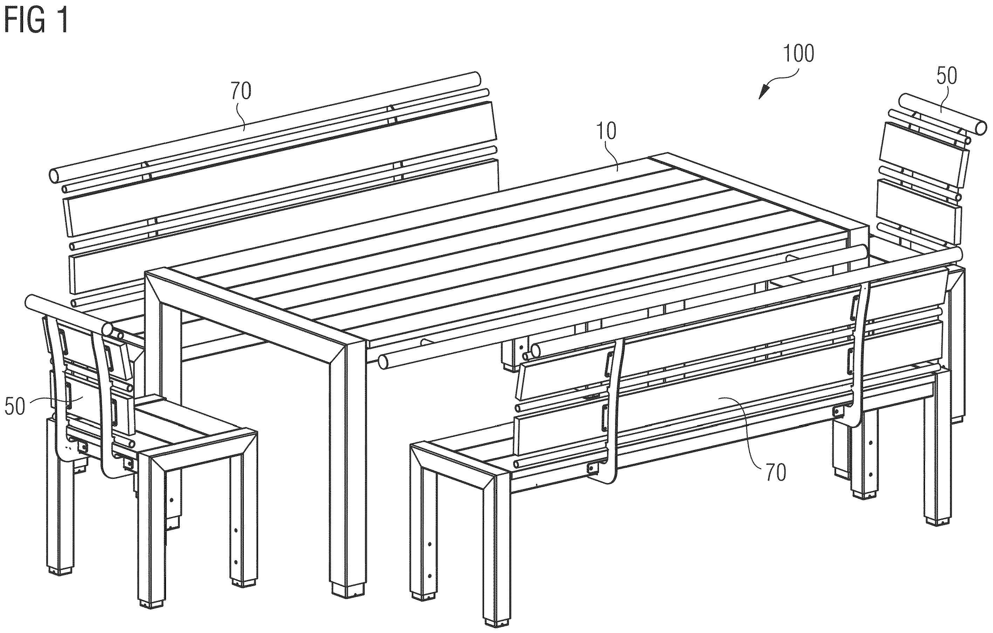

Anhand der Figuren 1 bis 15 wird zunächst ein besonders bevorzugtes Ausführungsbeispiel einer Gartenmöbelgarnitur 100 beschrieben, welche mehrere Möbelstücke 10, 50, 70 umfasst, hier nämlich einen Tisch 10, zwei Stühle 50 und zwei Bänke 70. Jedes dieser Möbelstücke 10, 50, 70 ist hier jeweils aus einem besonders bevorzugten Ausführungsbeispiel eines erfindungsgemäßen Möbelsystems 10, 50, 70 zusammenmontiert worden, d.h. das Möbelstück 10, 50, 70 ist hier jeweils das zusammengesetzte Möbelsystem 10, 50, 70, weshalb für das Möbelstück und das Möbelsystem jeweils der Einfachheit halber auch nur dieselben Bezugsziffern 10, 50, 70 verwendet werden.

Wie in der nachfolgenden Beschreibung der einzelnen Möbelstücke 10, 50, 70 deutlich wird, sind alle Möbelstücke 10, 50, 70 (bzw. Möbelsysteme 10, 50, 70) jeweils mit einem Tragelement 11, 51, 71 ausgestattet, an welches an beiden Stirnseiten jeweils ein Seitenteil 30, 55 angekoppelt ist, so dass das Tragelement 11, 51, 71 zwischen den Seitenteilen 30, 55 eingefasst ist und von diesen gehalten wird. Beim Tisch 10 bildet das Tragelement 11 die Tischplatte 11 und bei den Stühlen 50 und den Bänken 70 bildet das Tragelement 51, 71 jeweils im Wesentlichen die Sitzfläche 51, 71.

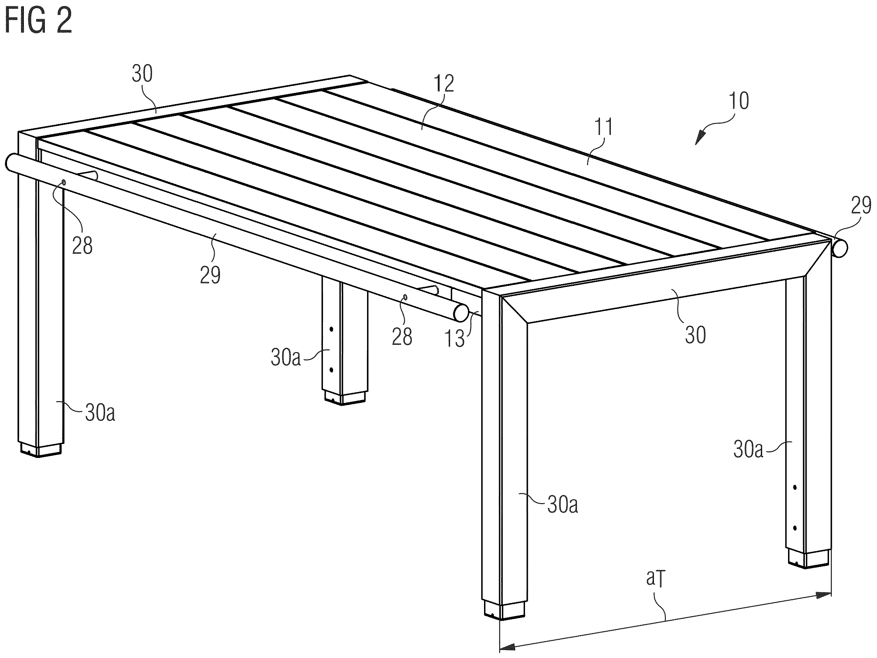

Im Folgenden wird nun das erfindungsgemäße Prinzip beispielhaft anhand der Kopplung der Seitenteile 30 mit dem Tragelement 11 des Tisches 10 der Gartenmöbelgarnitur 100 aus Figur 1 erläutert, wobei zunächst auf die Figuren 2 bis 7 verwiesen wird.

Der in Figur 2 abgebildete Tisch 10 umfasst wie erwähnt eine Tischplatte 11 als Tragelement 11 und zwei Seitenteile 30, zwischen denen diese Tischplatte 11 gehalten wird.

Die Tischplatte 11 besteht hier im Wesentlichen aus einer Metall-Unterkonstruktion und einem Deckbelag 12, welcher hier aus mehreren in Längsrichtung des Tisches 10 verlaufenden Panelbrettern 25 gebildet wird.

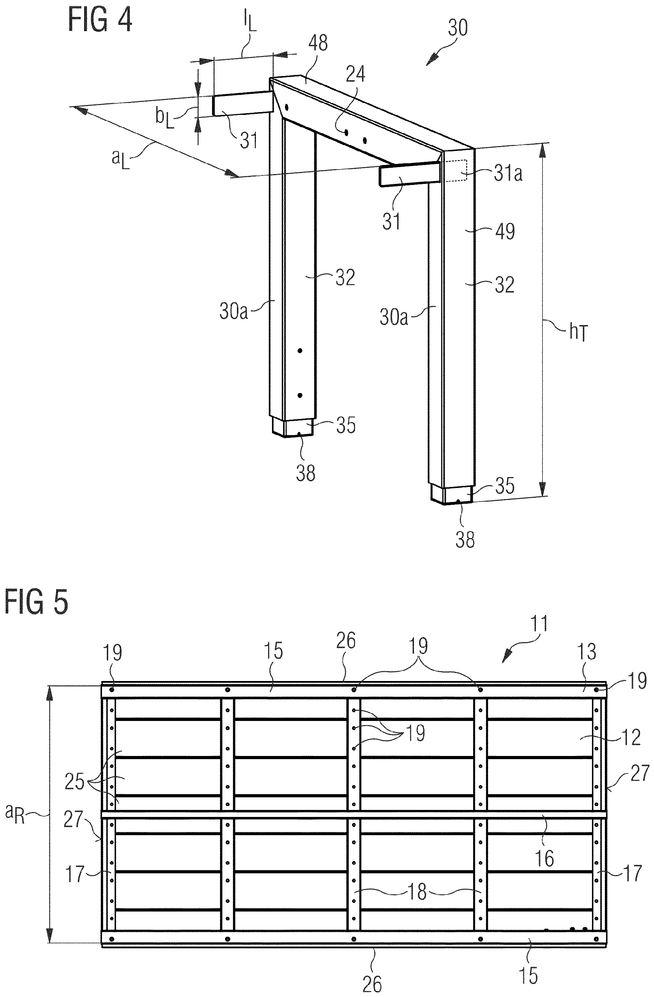

Die Metall-Unterkonstruktion 13 umfasst hier, wie dies besonders gut in der Unteransicht in Figur 5 zu sehen ist, zwei an den Seitenkanten des Deckbelags 12 entlang laufende Längsholme 15, einen mittig zwischen diesen Längsholmen 15 und parallel zu diesen verlaufenden Mittelholm 16 sowie jeweils an den beiden stirnseitigen Querkanten der Tischplatte 11 zwischen den Längsholmen 15 und dem Mittelholm 16 senkrecht zu diesen verlaufende äußere Querstreben 17 und jeweils in einem mittleren Bereich parallel zu den äußeren Querstreben 17 verlaufende innere Querstreben 18. Die Längsholme 15 und der Mittelholm 16 sind hier im Übrigen als hohle Vierkantrohre ausgebildet.

Die gesamte Metall-Unterkonstruktion 13 ist über eine Vielzahl von Schrauben 19 mit den Panelbrettern 25 verschraubt, so dass sich hierdurch insgesamt eine sehr stabile Tischplatte 11 ergibt. Dabei müssen die Längsholme 15 und der Mittelholm 16 nicht unbedingt direkt mit den Querstreben 17, 18 verbunden sein, da die Verbindung über die Verschraubung mit den Panelbrettern 25 ausreicht. Dennoch ist dies natürlich zur weiteren Erhöhung der Stabilität und/oder zur Reduzierung der Verschraubungsstellen mit den Panelbrettern 25 möglich. Die Längsholme 15 und der Mittelholm 16 können mit den Querstreben 17, 18 verschweißt sein, so dass insgesamt eine in sich stabile Metall-Unterkonstruktion 13 als eine Art Untergestell oder Tragrahmen für die Tischplatte 11 entsteht.

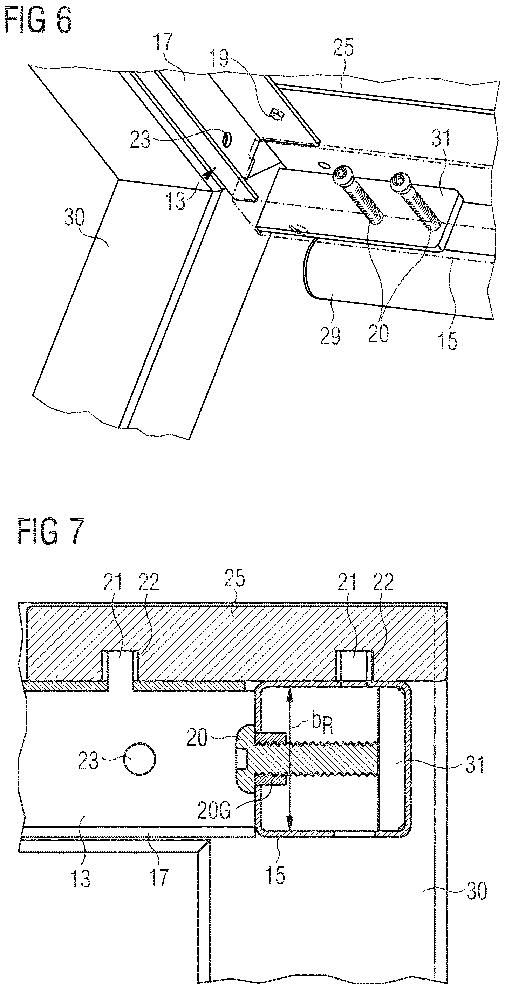

Die Panelbretter 25 sind zum Einschrauben der Schrauben 19 für die Verbindung mit der Metall-Unterkonstruktion 13 auf ihrer Unterseite jeweils an den passenden Stellen mit Einschraubmuffen 22, z. B. sogenannten RAMPA-Muffen 22, ausgestattet, die in Sacklöcher 21 der Panelbretter 25 eingebracht sind. In der Figur 7 sind als Beispiel zwei Sacklöcher 21 mit RAMPA-Muffen 22 im Schnitt ersichtlich (dort ohne Schrauben dargestellt). Derartige Muffen-Schrauben-Verbindungen lassen sich beliebig oft ohne Verschleiß oder Verlust der Haltekraft verbinden oder lösen. Das Innengewinde der Einschraubmuffen 22 kann dabei dem üblichen Gewinde einer typischen Maschinenschraube oder Imbus-Schrauben entsprechen, beispielsweise einem M6- oder M8-Gewinde, so dass auch handelsübliche Schrauben genutzt werden können, welche jederzeit einfach wieder zu beschaffen sind, falls eine solche Schraube verloren geht.

Die Panelbretter 25 sind hier aus Holz 25, vorzugsweise das besonders dichte Iroko- bzw. Kambala-Holz oder accoya ^{®}.

Die Abmessungen des sich aus den Panelbrettern 25 ergebenden Deckbelags 12 und die Abmessungen der Unterkonstruktion 13 sind so gewählt, dass sich die Unterkonstruktion 13 vollständig unter dem Deckbelag 12 befindet und dabei stirnseitig passgenau mit dem Deckbelag 12 abschließt und an den Längskanten jeweils in einem kleinen Abstand zu diesen, d.h. die Längsholme 15 sind um einen kleinen Abstand (von zum Beispiel ca. 5 mm) gegenüber den jeweils außen längs verlaufenden Panelbrettern 25 nach innen versetzt. Dies ist auch besonders gut in Figur 5 zu erkennen

Vorzugsweise liegen die Panelbretter 25 im Übrigen nicht dicht an dicht nebeneinander, sondern mit einem kleinen Abstand zueinander. Der Abstand zwischen den einzelnen Panelbrettern 25 beträgt vorzugsweise zumindest 2 mm und/oder höchstens 4 mm. Besonders bevorzugt beträgt dieser Abstand ca. 3 mm.

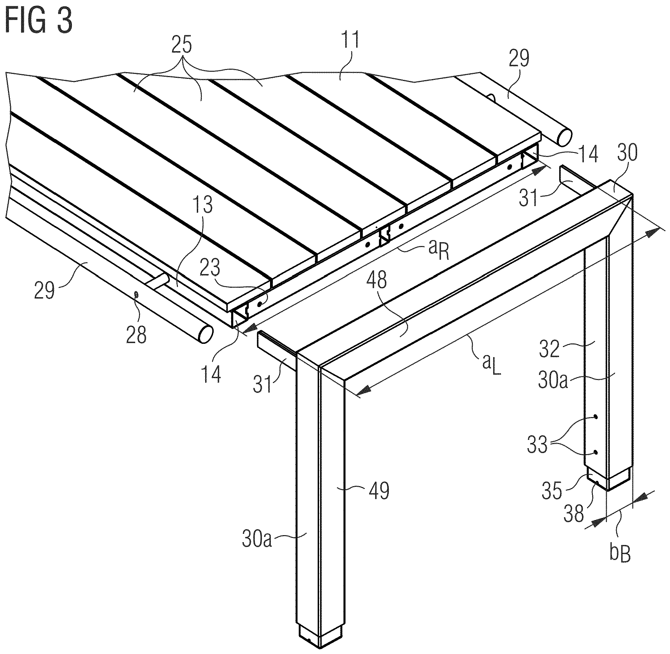

An der Tischplatte 11 befinden sich des Weiteren - wie insbesondere aus Figur 2 und 3 zu ersehen ist - an jeder der beiden Längsseiten 26 je eine Reling 29, die mit den Längsholmen 15 der Unterkonstruktion 13 mittels Relingschrauben 28 gekoppelt ist. Diese Relings 29 sind auf Wunsch also auch abschraubbar. Sie dienen zum einen dazu, dass der Tisch 10 von zwei Personen bequem an seinen beiden Längsseiten ergriffen und z. B. an einen anderen Platz gestellt werden kann. Ebenso bilden sie aber auch bequeme Armablagen. Sie sind bevorzugt aus Metallrohren gebildet, die stirnseitig jeweils verschlossen sind

Aus Figur 4 ist besonders gut die Grundform eines der beiden Seitenteile 30 des Tisches aus Figur 2 zu erkennen.

Das Seitenteil 30 weist einen Grundkörper 49 in Form eines nach unten offenen U-förmigen Rohrprofils 49 auf. Die nach unten weisenden, parallel zueinander verlaufenden U-Schenkel 32 des U-förmigen Rohrprofils 49 bilden dabei Bein-Hohlrohre 32 für höhenverstellbare Beine 30a des Seitenteils 30, welche später noch genauer erläutert werden. Obenseitig werden die beiden U-Schenkel 32 bzw. Bein-Hohlrohre 32 jeweils durch ein jeweils senkrecht zu diesen verlaufendes Verbindungsstück 48, welches ebenfalls aus einem Hohlrohr besteht und den U-Grund des U-förmigen Rohrprofils 49 bildet, verbunden. Wenn der Tisch bestimmungsgemäß aufgestellt ist, verläuft die Oberseite dieses Verbindungsstücks 48 vorzugsweise absolut waagerecht.

Es sei an dieser Stelle darauf hingewiesen, dass sich die Richtungsbezeichnungen "unten" und "oben" jeweils auf die bestimmungsgemäße Aufstellung des jeweiligen Möbelstücks beziehen.

Die Bein-Hohlrohre 32 und das Verbindungsstück 48 bestehen jeweils aus Vierkantrohren und weisen einen identischen - hier bevorzugt quadratischen - Querschnitt auf, so dass die Bein-Hohlrohre 32 mit dem Verbindungsstück 48 in den oberen Ecken (U-Ecken) des Grundkörpers 49 jeweils mit einer 45°-Gehrung miteinander verbunden sind. Im vorliegenden Fall handelt es sich bei den Hohlrohren um Metallrohre, bevorzugt aus Edelstahl, oder das fertige Seitenteil 30 wird nach der Fertigung pulverbeschichtet. Vorzugsweise sind die Bein-Hohlrohre 32 jeweils an den Schnittstellen entlang des gesamten Rohrquerschnitts mit dem Verbindungsstück 48 verschweißt.

Auf einer Seite (in Figur 4 die vordere Seite) weist das Seitenteil 30 in den beiden oberen Ecken des Grundkörpers 49, hier direkt unterhalb der Gehrung, an der die Bein-Hohlrohre 32 mit dem Verbindungsstück 48 verbunden, insbesondere verschweißt sind, zwei Stecklaschen 31 als Steckelemente 31 zur Koppelung des Seitenteils 30 mit dem Tragelement 11, hier also der Tischplatte 11, des Tisches 10 auf, wobei die Stecklaschen genau rechtwinklig zu einer Ebene stehen, in der sich das U-förmige Rohrprofil 49 erstreckt.

Die Stecklaschen 31 sind hier jeweils in die Seitenteile 30 eingeschweißt. Um eine besonders gute Stabilität und Passgenauigkeit (insbesondere einen möglichst exakten rechten Winkel zur Erstreckungsebene des U-förmigen Rohrprofils 49) zu gewährleisten, sind hier die Stecklaschen 31 jeweils mit einem Stecklaschenabschnitt 31a (in Figur 4 gestrichelt dargestellt) in einen passgenau gefertigten Schlitz an der oberen Ecke (knapp unter dem Gehrungsschnitt) des jeweiligen Bein-Hohlrohrs 32 eingesteckt, bis das stirnseitige Ende dieses Stecklaschenabschnitts 31a an die gegenüberliegende Wandung des Hohlprofils des Bein-Hohlrohrs 32 anstößt. An diesem stirnseitigen Ende und an der Durchtrittsstelle, d. h. an dem besagten Schlitz, ist die Stecklasche 31 dann mit dem Bein-Hohlrohr 32 verschweißt. D. h. die Stecklasche 31 ist an zwei gegenüberliegenden Wandungen des Hohlprofils des Bein-Hohlrohrs 32 mit diesem verschweißt. Dadurch wird das Risiko für einen Verzug der Stecklasche 31 (also eine Abweichung vom rechten Winkel) stark reduziert, auch bei einer eventuellen späteren relativ groben Behandlung des Seitenteils 30 z. B. beim Transport.

Mit Hilfe dieser Stecklaschen 31 erfolgt die Kopplung der Seitenteile 30 mit der Tischplatte 11, indem die Stecklaschen 31 in entsprechende Einstecköffnungen 14 der Tischplatte 11 eingeschoben werden. Dieser Vorgang ist besonders gut in Figur 3 zu sehen.

Wie bereits erwähnt sind ja die Längsholme 15 als hohle Vierkantrohre ausgebildet. An jedem stirnseitigen Ende der an den Längsseiten der Unterkonstruktion der Tischplatte 11 verlaufenden Längsholme 15 befindet sich somit eine Einstecköffnung 14, die als Gegensteckelement 14 dient. Die Tischplatte 11 kann auf diese Weise an jeder Stirnseite 27 mit einem Seitenteil 30 gekoppelt werden.

Hierzu sind die Abstände der beiden Längsholme 15 an der Tischplatte zueinander der Stecklaschen 31 am Seitenteil 30 sowie die Orientierung zueinander so gewählt, dass die Stecklaschen 31 in die Einstecköffnungen 14 der Längsholme 15 passig eingeführt werden können, wobei die nach außen voneinander weg weisenden Seitenflächen der Stecklaschen 31 sich direkt in Anlage zu den Innenseiten der äußersten Wandungen der beiden Längsholme 15 befinden.

Bei einem besonders bevorzugten Ausführungsbeispiel eines Tisches 10 beträgt der Abstand a_{L} der Außenseiten beider Stecklaschen 31 eines Seitenteils 30 zueinander je nach Modell vorzugsweise mindestens 750 mm und/oder maximal 1000 mm. Der Abstand a_{R} zwischen den Innenseiten der äußersten Wandungen der beiden Längsholme 15 ist hieran angepasst und beispielsweise (zur Einhaltung des gewünschten Spiels) nur geringfügig größer (z. B. maximal 0,5 mm bevorzugt maximal 0,2 mm).

Die Länge eines Tisches (Tischplatte 11 mit zwei Seitenteilen 30) beträgt insgesamt bevorzugt mindestens 100 cm, bevorzugt mindestens 160 cm und/oder bevorzugt maximal 260 mm. Der Tisch kann aber vorzugsweise, wie unten erläutert, auch auf Wunsch verlängert werden.

Um eine nahezu spielfreie Kopplung von Seitenteil 30 und Tischplatte 11 zu unterstützen, sind die Stecklaschen 31 an ihren Außenseiten so geformt bzw. bemessen, dass ihre Kontur möglichst gut an die innere Kontur der Längsholme im Bereich der äußersten Wandungen angepasst ist. D, h, dass auch die Höhe b_{L} einer Stecklasche an die lichte Höhe b_{R} des Hohlrohrs 15 bzw. Längsholms 15 angepasst ist, und die Radien an der oberen und unteren Außenkante der Stecklasche sind an die Radien der entsprechenden Innenkanten des Hohlrohrs 15 angepasst. Dies ist besonders gut im Schnitt in Figur 7 zu sehen.

Bei einem bevorzugten Ausführungsbeispiel beträgt die Höhe b_{L} der Stecklaschen 31 jeweils vorzugsweise ca. 45,6 mm und die lichte Höhe b_{R} im Inneren der Längsholme 15 beträgt hierzu passend vorzugsweise ca. 45,8 mm.

Die frei vom Seitenteil 30 eines Tisches 10 abstehende Länge l_{L} einer Stecklasche 31 kann im Übrigen bevorzugt mindestens 120 mm, besonders bevorzugt mindestens 140 mm und ganz besonders bevorzugt ca. 142 mm betragen.

Die zuvor beschriebene Kopplung mittels der Stecklaschen 31 reicht aus, um aus einer Tischplatte 11 und zwei Seitenteilen 30 einen Tisch 10 aufzubauen, der stabil steht, ohne in sich zu wackeln. Grundsätzlich wäre also keine weitere Stabilisierung oder Verklemmung erforderlich.

Um jedoch die Seitenteile 30 an der Tischplatte 11 gegen ein Herausziehen der Stecklaschen 31 zu sichern, können diese mittels Klemmschrauben 20, z. B. passend lange, handelsübliche Maschinenschrauben oder Imbus-Schrauben, jeweils im Längsholm 14 festgeklemmt werden. Alternativ können anstelle der Klemmschrauben 20 oder zusätzlich zu diesen auch andere Klemmelemente bzw. Fixierungselemente eingesetzt werden.

Wie aus der Unteransicht in Figur 6 in einen Eckbereich der Tischplatte 11 mit dem angekoppelten Seitenteil 30 (mit transparenter Darstellung des Längsholms 15 mit einer darin steckenden Stecklasche 31) gut zu erkennen ist, werden hier zwei Klemmschrauben 20 eingesetzt.

Die Figur 7 stellt einem Schnitt durch diesen Längsholm 15 im Bereich einer der Klemmschrauben 20 dar. Daraus ist ersichtlich, dass die Stecklaschen-Schraube 20 in einer Gewindebuchse 20g eingeschraubt ist, welche in die nach innen weisende, d. h. von der Außenkante der Tischplatte 11 weg weisende, Seitenwand des Längsholms 15 bzw. Hohlrohrs 15 eingepresst und/oder eingeschweißt ist. Die Klemmschraube ist im Längsholm 15 bis zur Stecklasche 31 geschraubt und drückt so die Stecklasche 31 fest gegen die Innenseite der äußeren Seitenwand des Längsholms 15. Diese Klemmschrauben 20 sind unter der Tischplatte gut verdeckt, aber dennoch einfach erreichbar.

Zusätzlich ist es übrigens möglich, sofern eine noch weitere Fixierung gewünscht ist, die Unterkonstruktion der Tischplatte 11 mit dem Seitenteil 30 zu verschrauben. Hierzu dienen Gewindesacklöcher 24 zwischen den Stecklaschen 31 in den Verbindungsstücken 48 der Seitenteile 30 (siehe Figur 4), die bei bestimmungsgemäßer Montage des Seitenteils 30 an der Tischplatte 11 zu Durchgangslöchern 23 in den stirnseitigen Querstreben 17 der Unterkonstruktion (siehe Figur 6) fluchtend angeordnet sind. Durch die Durchgangslöchern 23 hindurch können also zur Fixierung der Querstreben 17 der Unterkonstruktion am Seitenteil passend lange handelsübliche Schrauben, z. B. Maschinenschrauben oder Imbus-Schrauben, in die Gewindesacklöcher 24 geschraubt werden.

Es ist an dieser Stelle übrigens darauf hinzuweisen, dass die Abmessungen von Tischplatte 11 und Seitenteilen 30 und insbesondere die Lage der Stecklaschen 31 und der Längsholme 15 zueinander so gewählt sind, dass bei bestimmungsgemäßer Montage des Seitenteils 30 an der Tischplatte 11 die Oberseite der Tischplatte 11 mit der Oberseite des Seitenteils 30 fluchtet, so dass die Oberseite (des Verbindungsstücks 48) des Seitenteils 30 die Tischoberfläche stirnseitig erweitert.

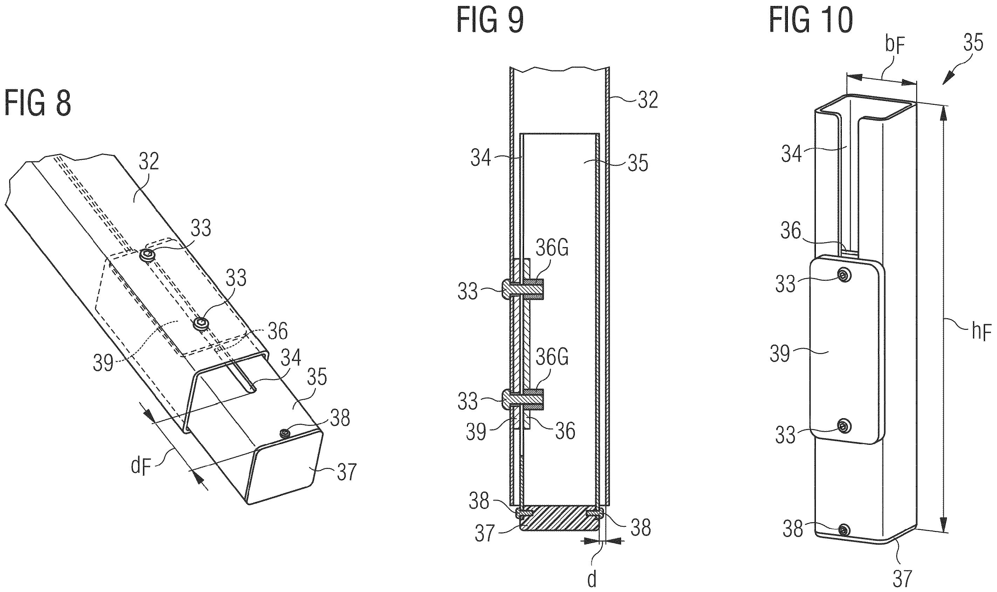

Im Folgenden wird anhand der Figuren 8 bis 10 die Konstruktion der höhenverstellbaren Beine 30a der Seitenteile 30 näher erläutert. Wie erwähnt, wird ein solches höhenverstellbares Bein 30a jeweils durch ein Teleskoprohr mit einem oberen Bein-Hohlrohr 32 und einem darin in eine Auszugsrichtung verschiebbaren und fixierbaren unteren Fußteil 35 gebildet. Das obere Bein-Hohlrohr 32 ist dabei einer der U-Schenkel 32 des U-förmigen Rohrprofils 49 des jeweiligen Seitenteils 30.

Das Fußteil 35 wird im Wesentlichen ebenfalls durch ein im Querschnitt rechteckiges Vierkantrohr gebildet, wobei die äußere Kantenlänge b_{F} (bzw. Breite) des Querschnitts des Fußteils 35 ein ganzes Stück kleiner ist als das entsprechende lichte Innenmaß des Bein-Hohlrohrs 32. Dadurch kann das Fußteil 35 locker von unten in das Bein-Hohlrohr 32 eingeführt werden.

Am unteren Ende des Fußteils 35 befindet sich eine Abdeckkappe 37, die mit einer kleinen Schraube 38, welche von der Seite her eingeschraubt ist, befestigt ist (siehe hierzu Figur 8). Diese Abdeckkappe 37, die das untere stirnseitige Ende des Fußteils 35 verschließt, ist vorzugsweise aus Kunststoff, um den Tisch auch schonend auf einem beliebigen Fußbodenbelag abstellen zu können.

An einer Längsseite des Fußteils 35 ist - wie in den Figuren 8 bis 10 jeweils gut zu erkennen ist - von der oberen Stirnseite aus, welche bestimmungsgemäß im Bein-Hohlrohr 32 steckt, ein Schlitz 34 eingebracht, der (hier mittig) in Längsrichtung des Fußteils 35 nach unten verläuft.

Dieser Schlitz 34 endet bei einem bevorzugten Ausführungsbeispiel in einem Abstand d_{F} von mindestens 200 mm, bevorzugt mindestens 300 mm, über dem unteren Ende des Fußteils. Die Höhe b_{F} des gesamten Fußteils 35 beträgt bevorzugt mindestens 300 mmm und/oder bevorzugt maximal 700 mm.

Entsprechend befinden sich im Bein-Hohlrohr 32 in einem unteren Endbereich (bevorzugt auf den im U des U-förmigen Rohrprofils 49 des jeweiligen Seitenteils 30 nach innen weisenden Seiten) zwei in Längsrichtung des Bein-Hohlrohrs 32 in einer Verbindungslinie übereinander angeordnete Durchgangslöcher. Diese Verbindungslinie verläuft dabei hier auch mittig auf der betreffenden Seite des Bein-Hohlrohrs 32. Das Fußteil 35 wird dann so in das Bein-Hohlrohr 32 gesteckt, dass die beiden Durchgangslöcher im Bein-Hohlrohr 32 mit dem Schlitz 34 im Fußteil 35 in Überdeckung sind.

Mit Hilfe von Klemmschrauben 33, die von außen durch die Durchgangslöcher im Bein-Hohlrohr 32 und dann im Inneren weiter durch den Schlitz 34 des Fußteils 35 geführt werden, und einer mit den Klemmschrauben 33 in Wechselwirkung stehenden Klemmplatte 36 im Inneren des Fußteils 35 kann das Fußteil 35 bei einer Höhenverschiebung im Bein-Hohlrohr 32 sicher geführt und auch an beliebigen Stellen fixiert werden.

Hierzu ist die Klemmplatte 36 in ihrer Breite senkrecht zur Auszugsrichtung an das Innenmaß des Fußteils 35 angepasst, sodass über die gesamte Länge der Klemmplatte 36 eine gute Führung des Fußteils 35 erfolgt.

Damit das Fußteil 35 leichter im Bein-Hohlrohr 32 gleitet, ist dafür gesorgt, dass an allen Seiten ein Spalt bzw. eine Distanz d zwischen Fußteil 35 und Bein-Hohlrohr 32 vorliegt. Hierzu befindet sich zwischen der äußeren Seite des Fußteils 35 und der Innenseite des Bein-Hohlrohrs 32 eine Abstandsplatte 39 als Abstandselement 39. Diese Abstandsplatte 39 ist mit Durchgangslöchern für die Durchführung der Klemmschrauben 33 versehen.

Die Dicke der Abstandsplatte 39 ist so bemessen, dass der Spalt z zwischen dem Fußteil 35 und dem Bein-Hohlrohr 32 an allen vier Seiten in etwa gleich ist. Dies ist besonders gut in Figur 9 zu sehen. Der Spalt bzw. die Distanz d kann vorzugsweise mindestens 2 mm, besonders bevorzugt ca. 3 mm betragen. Vorzugsweise beträgt er höchstens 4 mm.

Die Stärke b_{B}, also die äußeren Kantenlänge b_{B} (bzw. Breite) des Querschnitts, eines Beins 49 eines Tisches 10 beträgt vorzugsweise mindestens 60 mm, besonders bevorzugt ca. 80 mm.

Eine Konstruktion mit einem teleskopartig höhenverschiebbar in einem Bein-Hohlrohr 32 angeordneten Fußteil 35 ermöglicht eine stufenlose Höhenverstellbarkeit des Beins 49 in einem relativ weiten Bereich.

Die bevorzugten Maße eines Seitenteils 30 eines Tisches 10 können wie folgt sein:
Das Seitenteil 30 kann z. B. bevorzugt eine Breite a_{T} (Distanz zwischen den beiden äußeren Seiten der U Schenkel, siehe Figur 4) von mindestens 950 mm, besonders bevorzugt mindesten 960 mm aufweisen. Höchstens beträgt die Breite a_{T} vorzugsweise 1000 mm, besonders bevorzugt höchstens 980 mm. Besonders bevorzugt beträgt die Breite a_{T} ca. 970 mm.

Die Mindesthöhe h_{T} eines Seitenteils 30, also die minimal einstellbare Höhe eines Beins 49 bei voll eingefahrenem Fußteil 35, kann bevorzugt mindestens 700 mm, besonders bevorzugt ca. 780 mm, betragen. Vorzugsweise beträgt die Mindesthöhe h_{T} höchstens 880 mm, besonders bevorzugt höchstens 800 mm.

Die maximal einstellbare Höhe eines Seitenteils 30, also die Höhe eines Beins 49 bei voll ausgefahrenem Fußteil 35, kann bevorzugt mindestens 800 mm, besonders bevorzugt ca. 880 mm, betragen. Vorzugsweise beträgt die maximal einstellbare Höhe höchstens 980 mm, besonders bevorzugt höchstens 900 mm.

Die einstellbare Höhendifferenz eines Beins 49 beträgt bevorzugt mindestens 80 mm und/oder höchstens 120 mm. Besonders bevorzugt beträgt die Höhendifferenz ca. 100 mm.

Die Höheneinstellung eines erfindungsgemäßen Tisches 10, insbesondere bei erstmaligem Aufstellen, kann wie folgt ablaufen:
- den Tisch 10 auf einer geeigneten Unterstützung (wie Böcke oder dergleichen) in der gewünschten Höhe aufbocken;
- die Klemmschrauben 33 an den Beinen 49 lockern, wodurch automatisch die Fußteile 35 durch ihr Eigengewicht auf die gewünschte Höhe ausfahren;
- die Klemmschrauben 33 wieder festziehen;
- die Unterstützung entfernen.

Sollte der Tisch etwas kippeln, beispielsweise nach einer Umstellung an einen anderen Platz auf einer unebenen Fläche, reicht es prinzipiell aus, das dort zu kurze Bein zu verlängern. Hierzu kann der Tisch auf der diagonal gegenüberliegenden Seite beschwert werden, sodass er richtig auf drei Beinen steht, und dann können einfach die Klemmschrauben an dem zu kurzen Bein gelöst werden, sodass es in die richtige Länge ausfährt. Danach können die Klemmschrauben wieder festgezogen werden.

Als Beispiel für ein Sitzmöbel 50, 70 der Gartenmöbelgarnitur 100 wird anhand der Figu-ren 11 bis 14 zunächst ein Stuhl 50 näher erläutert. Die Stühle 50 und Bänke 70 der Möbelgarnitur 100 sind im Prinzip identisch aufgebaut, nur dass die Bänke 70, wie aus den Figuren ersichtlich ist, längere Sitzflächen als die Stühle 50 aufweisen.

Der Stuhl 50 umfasst eine Sitzfläche 51 als Trageelement 51, zwei Seitenteile 55 und eine Rückenlehne 60. Die Sitzfläche 51 und die Seitenteile 55 bilden eine Art "Sitzeinheit" 69, die ohne die optionale Rückenlehne 60 als Hocker verwendbar wäre.

Der prinzipielle Aufbau einer solchen Sitzeinheit 69 ist im Wesentlichen wie der eines Tisches 10. Jedoch weichen die Dimensionen einer Sitzeinheit 69 von denen eines Tisches 10 ab. Auf die weiteren Besonderheiten im Aufbau wird später näher eingegangen.

Die Sitzfläche 51 umfasst eine Unterkonstruktion 52, hier aus Metall, und einen Deckbelag 53, der wie bei der Tischplatte 11 aus mehreren Panelbrettern 53a besteht, die mit der Unterkonstruktion 52 (unter Nutzung von Einschraubmuffen) verschraubt sind.

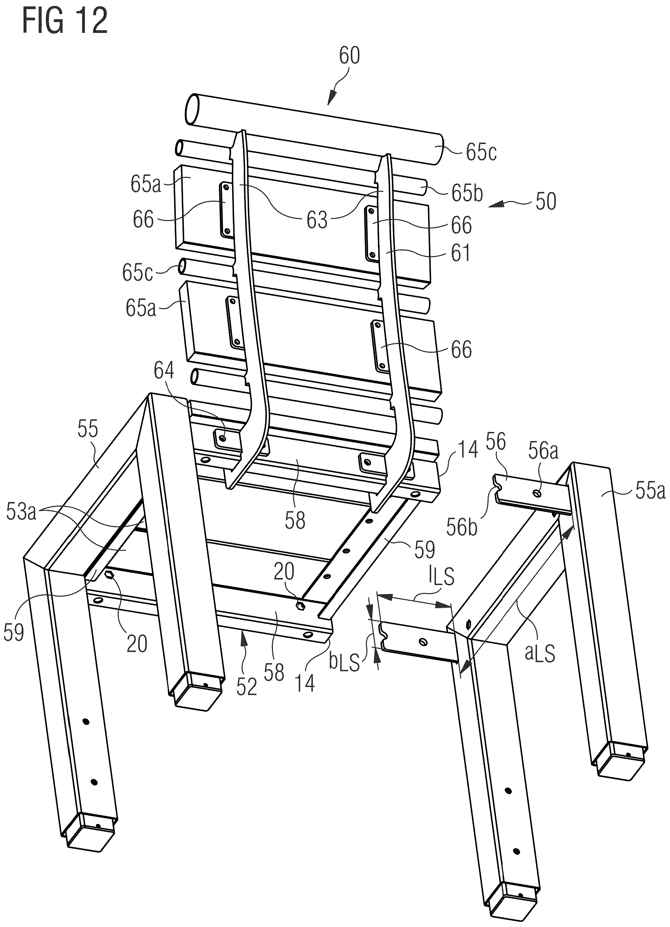

Die Unterkonstruktion 52 umfasst, wie in Figur 12 zu sehen ist, zwei Längsholme 58, welche wie die Längsholme 15 der Tischplatte als hohle Vierkantrohre ausgebildet sind (nur mit kleineren Abmessungen), und zwei Querstreben 59.

Die Seitenteile 55 eines Stuhls sind im Prinzip gleich aufgebaut wie die Seitenteile 11 eines Tischs 10, nur mit anderen Abmessungen. Insbesondere weisen sie ebenfalls nach demselben Prinzip teleskopartig aufgebaute, höhenverstellbare Beine 55a mit einem in jeweils einem Bein-Hohlrohr verschiebbaren Fußteil 57 auf. Insofern kann hierzu auch wieder auf die Figuren 8 bis 10 und die Erläuterungen dazu verwiesen werden.

Die einstellbare Höhendifferenz eines Beins 55a eines Sitzmöbels 50, 70 ist vorzugsweise an die einstellbare Höhendifferenz eines Beins 49 eines zugeordneten Tisches angepasst, um Tischhöhe und Sitzhöhe aneinander anzupassen.

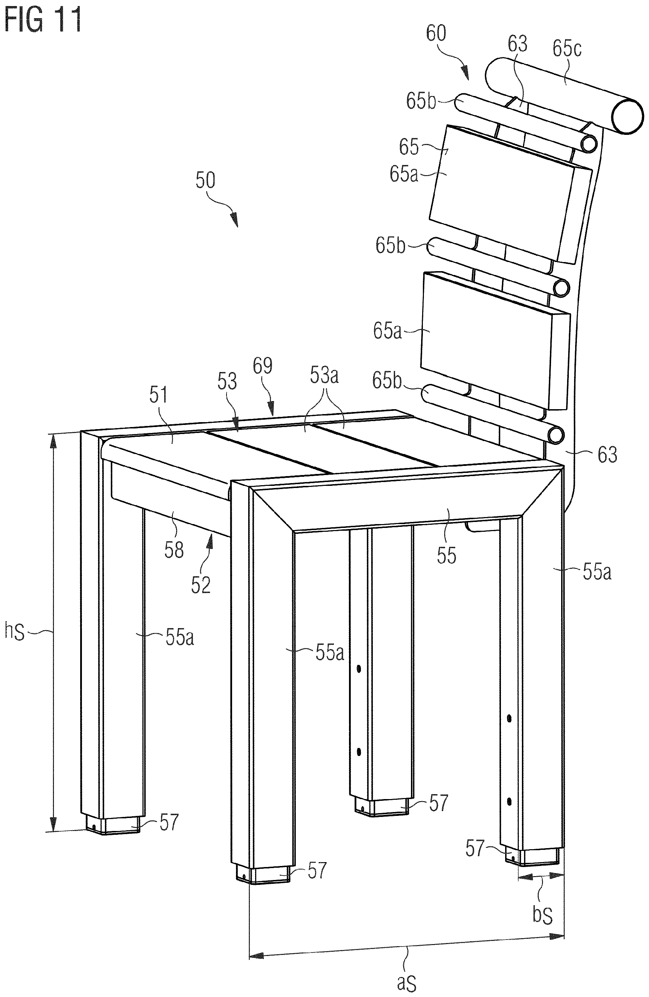

Die bevorzugten Maße eines Seitenteils 55 eines Sitzmöbels 50, 70 können wie folgt sein:
Das Seitenteil 55 kann z. B. bevorzugt eine Breite a_{S} (Distanz zwischen den beiden äußeren Seiten der U Schenkel, siehe Figur 11) von ca. 415 mm.

Die Mindesthöhe h_{S} eines Seitenteils 55, also die minimal einstellbare Höhe eines Beins 55a bei voll eingefahrenem Fußteil 57, beträgt bevorzugt mindestens 480 mm, besonders bevorzugt ca. 500 mm. Vorzugsweise beträgt die Mindesthöhe h_{S} höchstens 580 mm.

Die maximal einstellbare Höhe eines Seitenteils 55, also die Höhe eines Beins 55a bei voll ausgefahrenem Fußteil 57, beträgt bevorzugt mindestens 500 mm, besonders bevorzugt ca. 580 mm. Vorzugsweise beträgt die maximal einstellbare Höhe höchstens 600 mm.

Die einstellbare Höhendifferenz eines Beins 55a beträgt beispielsweise wieder bevorzugt mindestens 80 mm und/oder höchstens 120 mm. Besonders bevorzugt beträgt die Höhendifferenz ca. 100 mm.

Die Stärke b_{S}, also die äußeren Kantenlänge b_{S} (bzw. Breite) des Querschnitts, eines Beins 55a eines Sitzmöbels 50, 70 beträgt vorzugsweise mindestens 50 mm, besonders bevorzugt ca. 60 mm.

Auch die Ankopplung der Seitenteile 55 an die Sitzfläche 51 erfolgt prinzipiell wie die Ankopplung der Seitenteile 30 an die Tischplatte 10 mittels Stecklaschen 61 am Seitenteil 55, die in die stirnseitigen Enden (also die Einstecköffnungen 14, siehe Figur 12) der Längsholme 58 der Unterkonstruktion 52 der Sitzfläche 51 eingesteckt werden.

Jedoch sind auch die Abmessungen der Stecklaschen 61 und ihr Abstand zueinander bei der verkleinerten Ausführung der Seitenteile 55 (relativ zu den großen Seitenteilen 30 eines Tisches 10) geringer.

Bei einem besonders bevorzugten Ausführungsbeispiel beträgt die Höhe b_{LS} der Stecklaschen 61 jeweils vorzugsweise ca. 45,7 mm und die lichte Höhe im Inneren der Längsholme 58 beträgt hierzu passend vorzugsweise ca. 46 mm. Die frei abstehende Länge ILS einer Stecklasche 61 für das Seitenteil 55 eines Sitzmöbels beträgt hier bevorzugt ca. 112 mm.

Der Abstand a_{LS} der voneinander wegweisenden Außenseiten beider Stecklaschen 61 eines Seitenteils 55 zueinander beträgt vorzugsweise ca. 379 mm. Der Abstand zwischen den Innenseiten der äußersten Wandungen der beiden Längsholme 58 beträgt hierzu passend vorzugsweise ca. 380 mm.

Die Stecklaschen 61 an den Seitenteilen 55 der Sitzmöbel 50, 70 sind hier zudem jeweils mit einem Durchgangsloch 56a und an der Stirnseite jeweils mit einer Einbuchtung 56b versehen. Diese dienen zur möglichen Aufnahme der Schrauben einer lösbar an der Sitzfläche 51 ankoppelbaren Rückenlehne 60, wie nachfolgend anhand der Figuren 12 bis 14 erläutert wird.

Die Rückenlehne 60 weist eine Lehnfläche 65 auf, die an zwei Querstreben 63 gehalten wird, welche sich an einem ihrer Enden (im bestimmungsgemäß am Sitzmöbel 50, 70 montierten Zustand an der unteren Seite der Lehnfläche 65) jeweils über die Lehnfläche 65 hinaus erstrecken und dort jeweils ein Kopplungselement 61 zur Kopplung mit einem (dem hinteren) Längsholm 58 der Sitzfläche 51 aufweisen.

Die Lehnfläche 65 kann wie in Figur 12 dargestellt eine Anzahl von Panelbrettern 65a, vorzugsweise aus Holz, aufweisen, die an Flanschstücken 66 (unter Nutzung von Einschraubmuffen) festgeschraubt sind, die an den Querstreben 63 befestigt sind. Die Querstreben 63 sind vorzugsweise (wie die Seitenteile 55) aus Metall, z. B. Edelstahl oder pulverbeschichtetem Metall. Die Flanschstücke 66 können z.B. mit den Querstreben 63 verschweißt sein. An den oberen Enden sind hier die Querstreben 63 durch ein parallel zu den Panelbrettern 65a der Lehnfläche 65 verlaufendes Rohr 65c oder einen Stab (ähnlich der Reling am Tisch) abgeschlossen, welcher die Querstreben 63 verbindet. Auch im mittleren Bereich der Querstreben 63 kann parallel zu den Panelbrettern 65a zwischen diesen jeweils ein Rohr 65b oder Stab verlaufen, um die Querstreben 63 fest zu verbinden. Die Rohre 65b, 65c oder Stäbe können durch Steck-, Schraubverbindungen oder andere Verbindungsarten, wie z. B. Verschweißen, mit den Querstreben 63 verbunden sein.

Die im montierten Zustand im Wesentlichen vertikal verlaufenden Querstreben 63 können entsprechend der gewünschten Form der Rückenlehne 60 im Bereich der Lehnfläche leicht geschwungen sein, z. B. zur Ausbildung einer optimierten ergonomischen Form wie eine Lordosenunterstützung oder dergleichen.

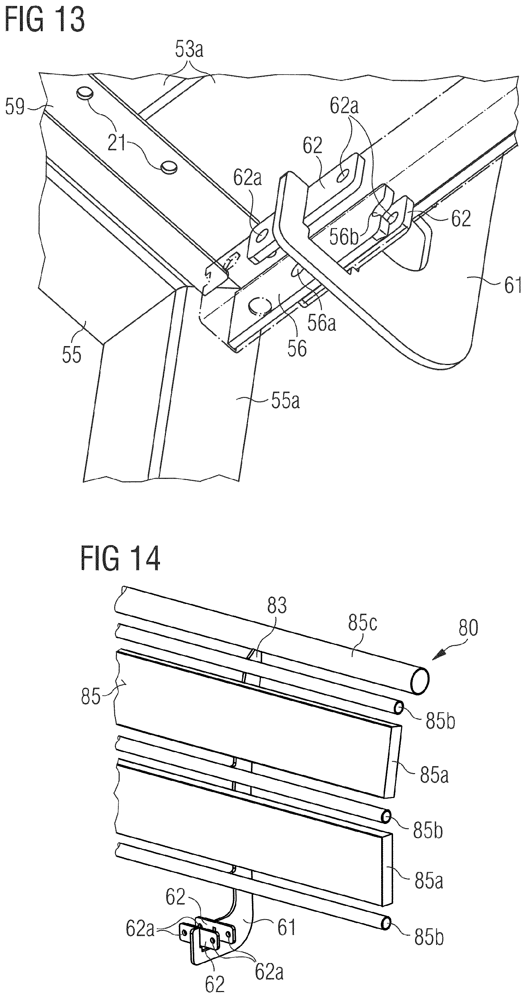

Im freien Bereich unterhalb der Lehnfläche (siehe insbesondere Figur 14, wobei hier ein Teil einer Rückenlehne 80 für eine Bank 70 dargestellt ist, die aber bis auf die Länge mit der Rückenlehne 60 eines Stuhls 50 identisch ist), verlaufen die Querstreben 63, 83 jeweils in einem in etwa viertelkreisförmigen Bogen nach vorne, so dass sie sich im montierten Zustand endseitig unter die Sitzfläche des betreffenden Sitzmöbels 50, 70 erstrecken.

An ihrem freien Ende tragen die Querstreben 63, 83 dort jeweils das Kopplungselement 61 zur Verbindung mit dem Längsholm 58 der Sitzfläche 51.

Ein solches Kopplungselement 61 umfasst hier zwei parallel im montierten Zustand der Rückenlehne am Sitzmöbel 50, 70 nach oben ragende Halteplatten 62 (wie in Figur 14 dargestellt), deren lichtere Abstand voneinander der Breite des Längsholms 58 entspricht, so dass der Längsholm 58 zwischen den Halteplatten 62 aufgenommen werden kann. D. h. das Kopplungselement 61 umgreift somit den Längsholm 59 von unten.

Jede der Klemmplatten 62 weist zwei Durchgangslöcher 62a für die Aufnahme von Durchgangsschrauben 64 auf. Die beiden Durchgangsschrauben 64 verbinden jeweils ein Kopplungselement 61 mit dem Längsholm 59 der Sitzfläche 51. Der hintere Längsholm 58 weist hierzu entsprechend angeordnete durchgängige Öffnungen bzw. Bohrungen zur Aufnahme der Durchgangsschrauben 64 für die Ankopplung eines Kopplungselements 61 zur Befestigung einer Rückenlehne 60, 80 auf.

Das Kopplungselement 61 wird bei den Stühlen 50 so angebracht, dass die Klemmplatten 62 jeweils auf der hinteren und vorderen Außenseite des hinteren Längsholms 58 auf der Höhe einer hinteren Stecklasche 56 liegen. Die Durchgangsschrauben 64 verlaufen dann jeweils durch ein Durchgangsloch 62a einer Klemmplatte 62, ein Durchgangsloch 58 auf der hinteren Innenseite des hinteren Längsholms 58, das Durchgangsloch 56a bzw. die Einbuchtung 56b einer hinteren Stecklasche 56, ein Durchgangsloch auf der vorderen Innenseite des hinteren Längsholms 59 bis zum Durchgangsloch 62a der Klemmplatte 62 auf der vorderen Seite des hinteren Längsholm 58. Dort können die Durchgangsschrauben 64 mit einer Mutter verschraubt werden. Alternativ könnte auch das Durchgangsloch 62a der Klemmplatte 62 auf der vorderen Seite des hinteren Längsholms 59 mit einem passenden Gewinde versehen sein. (Siehe zu dieser Konstruktion insbesondere Figur 13, in der die Durchgangslöcher 62a der Klemmplatten 62 jeweils passend in Überdeckung mit den Bohrungen im Längsholm 58 und dem Durchgangsloch 56a bzw. der Einbuchtung 56b einer darin eingesteckten Stecklasche 56 liegen, so dass hier die Durchgangsschrauben 64 durchgesteckt werden können. Die Durchgangsschrauben 64 selbst sind in Figur 12 zu erkennen).

Da hier zwangsläufig die Stecklasche 56 im hinteren Längsholm 59 durch die Durchgangsschrauben 64 bereits gesichert wird, wird hier insbesondere auf Klemmschrauben verzichtet, die die Stecklasche 56 fest gegen die Innenseite der äußeren Seitenwand des Längsholms 59 drücken, wie dies beim Tisch der Fall sein kann. Am vorderen Längsholm 58 werden dagegen wieder vorzugsweise Klemmschrauben 20 eingesetzt (siehe Figur 12).

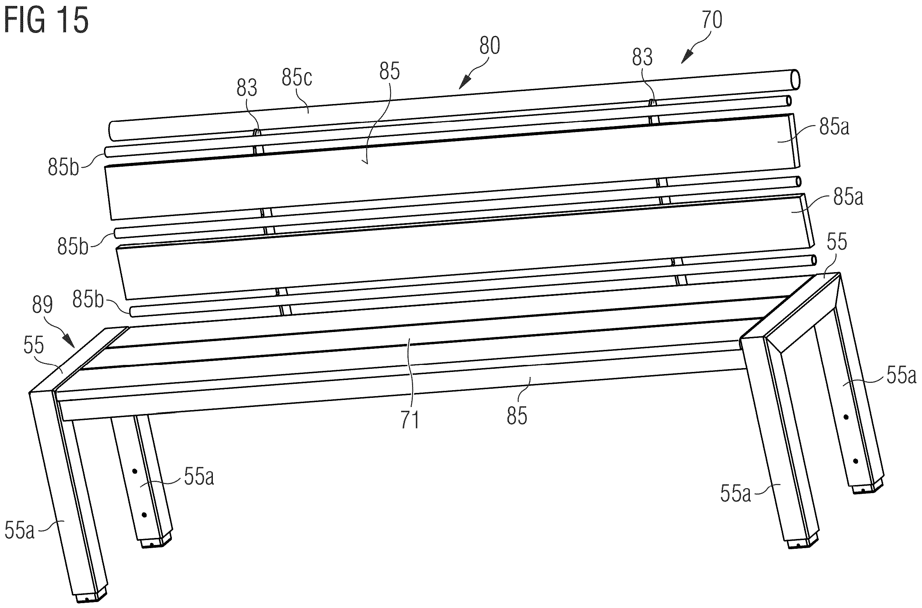

Eine bevorzugte Bank 70 ist wie ein bevorzugter Stuhl 50 aufgebaut, jedoch mit dem Unterschied, dass wie gesagt die Rückenlehne 80 und die Sitzeinheit 89 einer Bank 70 länger ausfallen als die Rückenlehne 60 und die Sitzeinheit 69 eines Stuhls 50 (siehe hierzu Figur 15). D. h. die Sitzeinheit 89 wird wieder aus zwei Seitenteilen 55 (welche identisch zu denen der Stühle 50 sind) und einer längeren Sitzfläche 71 als Tragelement 71 gebildet. Ebenso umfasst die Rückenlehne 80 genau wie die Rückenlehne 60 eines Stuhls 50 eine Lehnfläche 85 mit Panelbrettern 85a und dazwischen angeordneten Rohren 85b oder Stäben und oben einem endseitigen Rohr 85c oder Stab, die an Querstreben 83 befestigt sind. Da hier aber die Querstreben 83 in größerem Abstand zu den seitlichen Enden der Rückenlehne 80 angeordnet sind (siehe Figur 15), werden die Durchgangsschrauben 64 zur Befestigung der Rückenlehne 80 am hinteren Längsholm 58 nicht durch die Stecklaschen 56 gesteckt. Zur Sicherung der Stecklaschen 56 im Längsholm 58 können dann wieder entsprechende Klemmschrauben, wie beim Tisch, genutzt werden.

Es besteht zudem die Möglichkeit, einen Tisch 10 oder ein Sitzmöbel 50, 70 zu erweitern, indem mehrere Tragelemente 11, 51, 71 (also Tischplatten 11 oder Sitzflächen 51, 71) über geeignete Verbindungselemente 89, 99 aneinander gekoppelt werden.

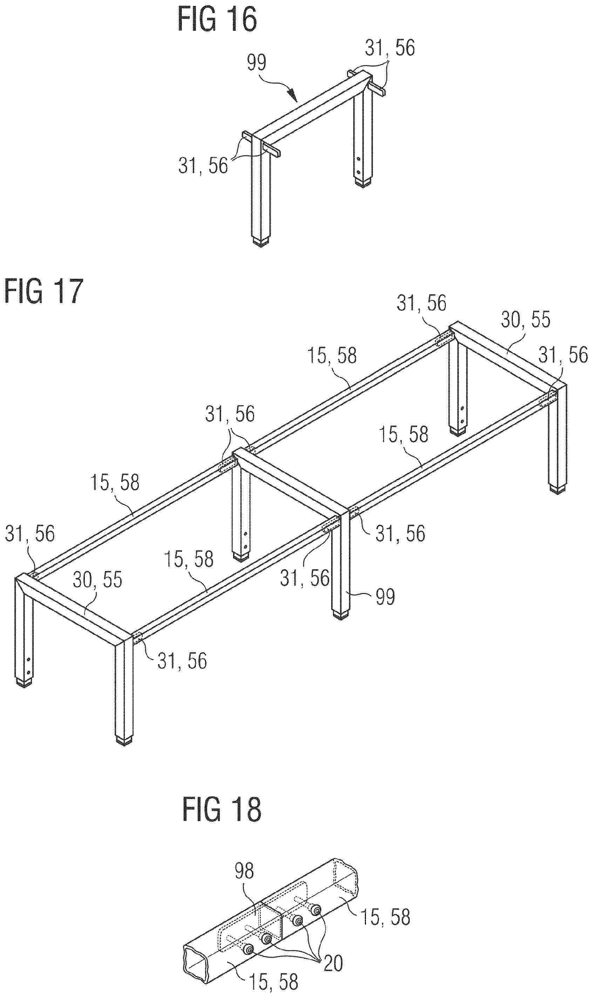

In Figur 16 ist eine erste Variante eines Verbindungselements 99 in Form eines Mittelteils 99 gezeigt. Ein solches Mittelteil 99 ist genauso aufgebaut wie ein Seitenteil 30, 55 mit zwei höhenverstellbare Beinen 49, 55a. Im Unterschied zu einem "normalen" Seitenteil 30, 55 erstrecken sich hier jedoch auf beiden gegenüberliegenden Seiten des Grundkörpers Stecklaschen 31 vom Grundkörper weg. Hierzu können die Stecklaschen 31 z. B. nur länger ausgebildet sein, so dass sie nach dem Einschweißen auf beiden Seiten aus dem U-förmigen Rohrprofil herausragen.

Da eine Erweiterung eines Tisches 10 oder eines Sitzmöbels 50, 70 mit einem solchen Mittelteil 99 in gleicher Art abläuft, wird im Folgenden als Beispiel die Erweiterung eines Tisches 10 mithilfe eines solchen Mittelteils 99 und einer zweiten Tischplatte 10 beschrieben, wobei davon ausgegangen wird, dass der Tisch vorher mit nur einer Tischplatte bereits aufgebaut war:
- Ein Seitenteil 30 wird vom Tisch 10 entfernt;
- Die Stecklaschen 31 auf der einen Seite des Mittelteils 99 werden in die freien Einstecköffnungen 14 der ersten Tischfläche 11 eingeführt;
- Die Stecklaschen 31 des entfernten Seitenteils 30 werden in die Einstecköffnungen 14 auf der einen Seite der neuen, zweiten Tischplatte 11 eingeführt;
- Die Stecklaschen 31 auf der anderen Seite des Mittelteils 99 werden in die freien Einstecköffnungen 14 der zweiten Tischplatte 11 eingeführt.

Es ist darauf hinzuweisen, dass natürlich die Reihenfolge der Kopplung der Tischplatten 11 am Mittelteil 99 oder an den Seitenteilen beliebig ist. Zudem können nach Belieben die Stecklaschen 31 jeweils mit einer Anzahl von Klemmschrauben 20 im Längsholm 15 der Tischplatte 11 gesichert werden.

In Figur 17 ist diese Art der Verlängerung dargestellt, wobei hier jedoch zur besseren Erkennbarkeit jeweils nur die Längsholme 15, 58 eines Tragelements 11, 51, 71 gezeigt und die Stecklaschen 31, 56 jeweils gestrichelt in den Längsholmen 15, 58 angedeutet sind. Es ist klar, dass die Abmessungen des Mittelteils 99 entsprechend an die Abmessungen des jeweiligen Seitenteils 30, 55 angepasst sind.

In Figur 18 ist eine alternative Möglichkeit zur Verlängerung eines Tisches 10, eines Stuhls 50, oder einer Bank 80 mit Hilfe von Verbindungs-Stecklaschen 98 als Verbindungselementen 98 gezeigt. Wie hier dargestellt, sind diese Verbindungs-Stecklaschen 98 einfache Metallstreifen, die im Wesentlichen der Form der Stecklaschen 31, 56 an den Seitenteilen 30, 55 entsprechen, nur dass sie in etwa doppelt so lang wie der in die Längsholme 15, 58 jeweils einzusteckende Abschnitt der betreffenden Stecklaschen 31, 56 sind. Zur Erweiterung einer ersten Tischplatte 11 oder einer Sitzfläche 51, 71 werden in die Längsholme 15, 59 an der entsprechenden Seite jeweils die Verbindungs-Stecklaschen 98 zur Hälfte eingesteckt und dort mithilfe von Klemmschrauben 20 fixiert, wie dies oben für den Tisch bereits erläutert wurde. Anschließend kann dann die jeweilige erste Tischplatte 11 bzw. Sitzfläche 51,71 mit einer zweiten Tischplatte 11 bzw. Sitzfläche 51, 71 gekoppelt werden, indem die freien Enden der Verbindungs-Stecklaschen 98, die aus den Längsholmen 15, 58 der ersten Tischplatte 11 bzw. Sitzfläche 51, 71 herausragen, in die Längsholme 15, 58 der zweiten Tischplatte 11 bzw. Sitzfläche 51, 71 hineingesteckt werden und dort ebenfalls mithilfe der Klemmschrauben 20 fixiert werden. Dies ist in Figur 18 für den Anschluss eines Längsholms 15, 58 schematisch dargestellt.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der durch die Patentansprüche definierten Erfindung zu verlassen. Beispielsweise können die Deckbeläge mit einer Platte aus einem Stück realisiert werden. Andere Ausführungsformen des Tisches mit Unterkonstruktionen sind möglich. Insbesondere sind auch Sitzmöbel ohne Rückenlehne einsetzbar. In dem Fall können die Durchgangslöcher am Längsholm 58 für die Aufnahme von Schrauben des Kopplungselementes der Rückenlehne jeweils mithilfe von Blindschrauben verschlossen werden. Auch sind die oben genannten konkreten Abmessungen nur bevorzugte, vorteilhafte Ausführungsbeispiele und andere Maße sind nicht ausgeschlossen. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einrichtung", "Anordnung" und "System" nicht aus, dass die betreffende Komponente aus mehreren zusammenwirkenden Teilkomponenten besteht, die gegebenenfalls auch räumlich verteilt sein können.

### Bezugszeichenliste

10 Möbelsystem / Möbelstück / Tisch
11 Tragelement / Tischplatte
12 Deckbelag
13 Unterkonstruktion
14 Gegensteckelement / Einstecköffnung
15 Längsholm / Hohlrohr
16 Mittelholm
17 Querstrebe
18 innere Querstrebe
19 Schraube
20 Fixierungselement / Klemmelement / Klemmschraube
20g Gewindebuchse
21 Sackloch
22 Einschraubmuffe / RAMPA-Muffe
23 Durchgangsloch
24 Gewindesackloch
25 Panelbrett
26 Längsseite
27 Stirnseite
28 Relingschraube
29 Reling
30 Seitenteil
30a (höhenverstellbares) Bein
31 Steckelement / Stecklasche
31a Stecklaschenabschnitt
32 Bein-Hohlrohr
33 Klemmschraube
34 Schlitz
35 Fußteil
36 Klemmplatte
36g Gewindeloch
37 Abdeckkappe
38 Schraube
39 Abstandselement / Abstandsplatte
48 Verbindungsstück
49 Grundkörper / U-förmiges Rohrprofil
50 Möbelsystem / Möbelstück / Stuhl
51 Tragelement / Sitzfläche
52 Unterkonstruktion
53 Deckbelag
53a Panelbrett
54 Durchgangsloch
55 Seitenteil
55a Bein
56 Steckelement / Stecklasche
56a Durchgangsloch
56b Einbuchtung
57 Fußteil
58 Längsholm / Hohlrohr
59 Querstrebe
60 Rückenlehne
61 Kopplungselement
62 Klemmplatte
62a Durchgangsloch
63 Querstrebe
64 Durchgangsschraube
65 Lehnfläche
65a Panelbrett
65b Rohr
65c Rohr
66 Flanschstücke
69 Sitzeinheit
70 Möbelsystem / Möbelstück / Bank
71 Tragelement / Sitzfläche
80 Rückenlehne
83 Querstrebe
85 Lehnfläche
85a Panelbrett
85b Rohr
85c Rohr
98 Verbindungselement / Verbindungs-Stecklasche
99 Verbindungselement / Mittelteil
100 Möbelgarnitur
a_{L} Abstand
a_{LS} Abstand
a_{R} Abstand
a_{S} Breite eines Seitenteils
a_{T} Breite eines Seitenteils
b_{B} Kantenlänge / Breite eines Beins
b_{L} Höhe einer Stecklasche
b_{LS} Höhe einer Stecklasche
b_{F} Kantenlänge / Breite eines Fußteils
b_{F} Höhe des Fußteils
b_{R} lichte Höhe eines Hohlrohrs
b_{S} Kantenlänge / Breite) eines Beins
d Distanz
d_{F} Abstand
h_{T} Mindesthöhe eines Seitenteils
h_{S} Mindesthöhe eines Seitenteils
l_{L} Länge einer Stecklasche
l_{LS} Länge einer Stecklasche

## Patentansprüche

1. Möbelsystem (10, 50, 70) mit zumindest zwei Seitenteilen (30, 55), welche lösbar mit zumindest einem Tragelement (11, 51, 71) des Möbelsystems (10, 50, 70) koppelbar sind, wobei die Seitenteile (30, 55) jeweils zumindest zwei jeweils in das Seitenteil (30, 55) integrierte Steckelemente (31, 56) aufweisen und das Tragelement (11, 51, 71) an zumindest einer Seite zumindest zwei, vorzugsweise in das Tragelement (11, 51, 71) integrierte, Gegensteckelemente (14) aufweist, um das Seitenteil (30, 55) mit dem Tragelement (11, 51, 71) zu koppeln, wobei das Tragelement (11, 51, 71) zumindest zwei Längsholme (15, 58) sowie einen Deckbelag (13, 53) und/oder Querstreben (17, 59) umfasst, wobei der Deckbelag (13, 53) und/oder die Querstreben (17, 59) die Längsholme (15) verbinden, wobei die Abmessungen des Tragelements (11, 51, 71) und der Seitenteile (30, 55), insbesondere die Lage der Steckelemente (31, 56) und Gegensteckelemente (14), so gewählt sind, dass bei bestimmungsgemäßer Montage eines Seitenteils (30, 55) an dem Tragelement (11, 51, 71) die Oberseite des Tragelements (11, 51, 71) mit der Oberseite des Seitenteils (30, 55) fluchtet.

2. Möbelsystem nach Anspruch 1, wobei die Steckelemente (31, 56) und/oder Gegensteckelemente (14) jeweils Stecklaschen (31, 56) und/oder Einstecköffnungen (14) umfassen, in welche die Stecklaschen (31, 56) einsteckbar sind,
wobei bevorzugt die Seitenteile (30, 55) als Steckelemente (31, 56) jeweils zumindest zwei Stecklaschen (31, 56) aufweisen und das Tragelement (11, 51, 71) an zumindest einer Seite zumindest zwei Einstecköffnungen (14) als Gegensteckelemente (14), zum Einstecken der beiden Stecklaschen (31, 56) eines Seitenteils (30, 55) aufweist, wobei besonders bevorzugt eine Einstecköffnung (14) durch ein offenes Ende eines Hohlrohrs (15, 58) gebildet wird.

3. Möbelsystem nach Anspruch 2, wobei zumindest jeweils ein Teil einer Innenkontur der Einstecköffnungen (14), insbesondere das offene Ende der Hohlrohre (15, 58), jeweils an zumindest einen Teil der Außenkonturen eines Steckelements (31, 56), insbesondere einer Stecklasche (31, 56), so angepasst ist und die Positionen und Orientierung der Steckelemente (31, 56) und der Kopplungsöffnungen (14) so zueinander gewählt sind, dass die Steckelemente (31, 56) passig in die Einstecköffnungen (14) einsteckbar sind,
und/oder
wobei an den Einstecköffnungen (14), insbesondere an den Hohlrohren (15, 58), Fixierungselemente (20), vorzugsweise Klemmelemente (20), angeordnet sind, um die Steckelemente (31, 56), insbesondere Stecklaschen (31, 56), in den Einstecköffnungen (14) lösbar zu fixieren, bevorzugt festzuklemmen.

4. Möbelsystem nach einem der vorstehenden Ansprüche,
wobei die Längsholme (15, 58) jeweils an zumindest einer Stirnseite (27) eine der Einstecköffnungen (14) aufweisen und/oder die Längsholme (15, 58) Hohlrohre (15, 58) umfassen.

5. Möbelsystem, insbesondere nach einem der vorstehenden Ansprüche, mit zumindest zwei Seitenteilen (30, 55, 75), welche lösbar mit zumindest einem Tragelement (11, 51, 71) des Möbelsystems (10, 50, 70), koppelbar sind, wobei die Seitenteile (30, 55, 75) jeweils zwei höhenverstellbare Beine (30a, 55a) umfassen,
wobei die Beine (30a, 55a) jeweils bevorzugt ein Teleskoprohr mit einem oberen Bein-Hohlrohr (32) und einem darin verschiebbar und fixierbaren unteren Fußteil (35, 57) umfassen.

6. Möbelsystem nach Anspruch 5, wobei die Außenmaße der Fußteile (35) kleiner als die Innenmaße der Bein-Hohlrohre (32) sind, und die Fußteile (35) mittels eines Abstandselements (39) in einer Distanz (d) zu den Innenwänden der Bein-Hohlrohre (32) geführt werden,
wobei vorzugsweise die Bein-Hohlrohre (32) und die Fußteile (35) jeweils als Vierkant-rohre ausgebildet sind und besonders bevorzugt das Abstandselement (39) eine Abstandsplatte (39) umfasst.

7. Möbelsystem nach einem der vorstehenden Ansprüche, wobei das Seitenteil (30, 55, 75) ein nach unten offenes U-förmiges Rohrprofil (49) umfasst, wobei bevorzugt die U-Schenkel des U-förmigen Rohrprofils (49) die Bein-Hohlrohre (32) bilden.

8. Möbelsystem nach Anspruch 7, wobei die Steckelemente (31, 56), insbesondere Stecklaschen (31, 56), vorzugsweise im Bereich der Ecken des U-förmiges Rohrprofils (49), so am Seitenteil (30, 55, 75) angeordnet sind, dass sie senkrecht zu einer Ebene stehen, in welcher sich das U-förmige Rohrprofil (49) erstreckt.

9. Möbelsystem nach einem der vorstehenden Ansprüche, wobei die Steckelemente (31, 56), insbesondere Stecklaschen (31, 56), mit den Seitenteilen (30, 55, 75) verschweißt sind, vorzugsweise mit einem Stecklaschenabschnitt (31a) in das Seitenteil (30, 55, 75) eingeschweißt sind.

10. Möbelsystem nach einem der vorstehenden Ansprüche, umfassend Verbindungelemente (98, 99) zur Verbindung zweier Tragelemente (11, 51, 71),
wobei die Verbindungelemente (99) vorzugsweise zumindest ein Mittelteil (99) umfassen, welches auf zwei gegenüberliegenden Seiten Steckelemente (31), insbesondere Stecklaschen (31), jeweils zur Kopplung mit einem Tragelement (11, 51, 71) aufweist,
und/oder
wobei die Verbindungelemente (98), vorzugsweise Verbindungs-Steckelemente (98), insbesondere Verbindungs-Stecklaschen (98), umfassen.

11. Möbelsystem nach einem der vorstehenden Ansprüche, umfassend zumindest eine am Tragelement (51, 71) lösbar ankoppelbare Rückenlehne (60, 80), wobei die Rückenlehne (60, 80) bevorzugt eine Lehnfläche (65, 85) und zumindest zwei Querstreben (63, 83) umfasst, welche sich an einem Ende jeweils über die Lehnfläche (65, 85) hinaus erstrecken und jeweils ein Kopplungselement (61) zur Kopplung mit einem Tragelement (51, 71) des Möbelsystems (50,70) aufweisen.

12. Möbelsystem nach einem der vorstehenden Ansprüche, umfassend zumindest eine am Tragelement (11, 51, 71) lösbar ankoppelbare Reling (29).

13. Möbelstück (10, 50, 70), welches aus einem Möbelsystem (10, 50, 70) nach einem der Ansprüche 1 bis 12 aufgebaut ist, wobei das Möbelstück (10, 50, 70) vorzugsweise ein Gartenmöbel (10, 50, 70) ist, besonders bevorzugt eines der folgenden Möbelstücke (10, 50, 70):
- einen Tisch (10),
- ein Sitzmöbel (70,50) insbesondere eine Bank (70) oder ein Stuhl (50),
- ein Regal,
- ein Sideboard,
- ein Schrank.

14. Möbelgarnitur (100), insbesondere Gartenmöbelgarnitur (100), mit einer Mehrzahl von Möbelstücken (10, 50, 70) gemäß Anspruch 13.

15. Verfahren zum Aufbau eines Möbelstücks (10, 50, 70), umfassend zumindest die Schritte:
- Bereitstellung eines Möbelsystems (10, 50, 70) nach einem der Ansprüche 1 bis 12,
- Kopplung von zwei Seitenteilen (30, 55, 75) des Möbelsystems (10, 50, 70) mit zumindest einem Tragelement (11, 51, 71) des Möbelsystems (10, 50, 70), wobei jeweils zumindest zwei, jeweils in das Seitenteil (30, 55, 75) integrierte, Steckelemente (31, 56) eines Seitenteils (30, 55, 75) mit, vorzugsweise in das Tragelement (11, 51, 71) integrierten, Gegensteckelementen (14) an einer Seite des Tragelements (11, 51,71) gekoppelt werden.

16. Verwendung eines Möbelsystems (10, 50, 70) nach einem der Ansprüche 1 bis 12 zum Aufbau eines Möbelstücks (10, 50, 70).

## Claims

1. Furniture system (10, 50, 70) with at least two side parts (30, 55) which can be detachably coupled to at least one supporting element (11, 51, 71) of the furniture system (10, 50, 70),
wherein the side parts (30, 55) each have at least two plug-in elements (31, 56) integrated into the side part (30, 55) and the support element (11, 51, 71) has at least on one side two mating plug-in elements (14), preferably integrated into the support element (11, 51, 71), 71) in order to couple the side part (30, 55) to the supporting element (11, 51, 71),
wherein the supporting element (11, 51, 71) comprises at least two longitudinal bars (15, 58) as well as a deck covering (13, 53) and/or cross struts (17, 59), wherein the deck covering (13, 53) and/or the cross struts (17, 59) connect the longitudinal spars (15), wherein the dimensions of the supporting element (11, 51, 71) and the side parts (30, 55), in particular the position of the plug-in elements (31, 56) and mating plug-in elements (14), are selected such that, when a side part (30, 55) is mounted on the support element (11, 51, 71) as intended, the upper side of the support element (11, 51, 71) is aligned with the upper side of the side part (30, 55).

2. Furniture system according to claim 1, wherein the plug-in elements (31, 56) and/or mating plug-in elements (14) each comprise plug-in tabs (31, 56) and/or insertion openings (14) into which the plug-in tabs (31, 56) can be inserted,
wherein preferably the side parts (30, 55) each have at least two plug-in tabs (31, 56) as plug-in elements (31, 56) and the support element (11, 51, 71) has at least two plug-in openings (14) on at least one side as mating plug-in elements (14) for plugging in the two plug-in tabs (31, 56) of a side part (30, 55), wherein particularly preferably one insertion opening (14) is formed by an open end of a hollow tube (15, 58).

3. Furniture system according to claim 2, wherein at least a part of an inner contour of each of the insertion openings (14), in particular the open end of the hollow tubes (15, 58), is adapted to at least a part of the outer contours of a plug-in element (31, 56), in particular a plug-in tab (31, 56), and the positions and orientation of the plug-in elements (31, 56) and the coupling openings (14) are selected relative to one another in such a way that the plug-in elements (31, 56) can be inserted into the insertion openings (14) in a fitting manner,
and/or
wherein fixing elements (20), preferably clamping elements (20), are arranged at the insertion openings (14), in particular at the hollow tubes (15, 58), in order to releasably fix, preferably clamp, the plug-in elements (31, 56), in particular plug-in tabs (31, 56), in the insertion openings (14).

4. Furniture system according to one of the preceding claims,
wherein the longitudinal spars (15, 58) each have one of the insertion openings (14) on at least one end face (27) and/or the longitudinal spars (15, 58) comprise hollow tubes (15, 58).

5. Furniture system, in particular according to one of the preceding claims, having at least two side parts (30, 55, 75) which can be detachably coupled to at least one supporting element (11, 51, 71) of the furniture system (10, 50, 70), the side parts (30, 55, 75) each comprising two height-adjustable legs (30a, 55a),
wherein the legs (30a, 55a) each preferably comprise a telescopic tube with an upper hollow leg tube (32) and a lower foot part (35, 57) which can be displaced and fixed therein.

6. Furniture system according to claim 5, wherein the outer dimensions of the foot parts (35) are smaller than the inner dimensions of the hollow leg tubes (32), and the foot parts (35) are guided at a distance (d) from the inner walls of the hollow leg tubes (32) by means of a spacer element (39),
wherein preferably the hollow leg tubes (32) and the foot parts (35) are each designed as square tubes and particularly preferably the spacer element (39) comprises a spacer plate (39).

7. Furniture system according to one of the preceding claims, wherein the side part (30, 55, 75) comprises a downwardly open U-shaped tubular profile (49), wherein preferably the U-legs of the U-shaped tubular profile (49) form the leg hollow tubes (32).

8. Furniture system according to claim 7, wherein the plug-in elements (31, 56), in particular plug-in tabs (31, 56), preferably in the region of the corners of the U-shaped tubular profile (49), are arranged on the side part (30, 55, 75) in such a way that they are perpendicular to a plane in which the U-shaped tubular profile (49) extends.

9. Furniture system according to one of the preceding claims, wherein the plug-in elements (31, 56), in particular plug-in tabs (31, 56), are welded to the side parts (30, 55, 75), preferably with a plug-in tab section (31a) welded into the side part (30, 55, 75).

10. Furniture system according to one of the preceding claims, comprising connecting elements (98, 99) for connecting two supporting elements (11, 51, 71),
wherein the connecting elements (99) preferably comprise at least one central part (99), which on two opposite sides has plug-in elements (31), in particular plug-in tabs (31), in each case for coupling to a supporting element (11, 51, 71),
and/or
wherein the connecting elements (98) preferably comprise connecting plug-in elements (98), in particular connecting plug-in lugs (98).

11. Furniture system according to one of the preceding claims, comprising at least one backrest (60, 80) which can be detachably coupled to the supporting element (51, 71), the backrest (60, 80) preferably comprising a backrest surface (65, 85) and at least two cross struts (63, 83) which each extend beyond the backrest surface (65, 85) at one end and each have a coupling element (61) for coupling to a supporting element (51, 71) of the furniture system (50, 70).

12. Furniture system according to one of the preceding claims, comprising at least one railing (29) which can be detachably coupled to the supporting element (11, 51, 71).

13. Piece of furniture (10, 50, 70) which is constructed from a furniture system (10, 50, 70) according to one of claims 1 to 12, wherein the piece of furniture (10, 50, 70) is preferably a piece of garden furniture (10, 50, 70), particularly preferably one of the following pieces of furniture (10, 50, 70):
- a table (10),
- a piece of seating furniture (70, 50), in particular a bench (70) or a chair (50),
- a shelf,
- a sideboard,
- a cupboard.

14. Furniture set (100), in particular garden furniture set (100), with a plurality of furniture pieces (10, 50, 70) according to claim 13.

15. A method of assembling a piece of furniture (10, 50, 70) comprising at least the steps of:
- Providing a furniture system (10, 50, 70) according to any one of claims 1 to 12,
- Coupling of two side parts (30, 55, 75) of the furniture system (10, 50, 70) to at least one support element (11, 51, 71) of the furniture system (10, 50, 70), wherein in each case at least two plug-in elements (31, 56) of a side part (30, 55, 75), each integrated in the side part (30, 55, 75), are coupled to mating plug-in elements (14), preferably integrated in the support element (11, 51, 71), on one side of the support element (11, 51, 71).

16. Use of a furniture system (10, 50, 70) according to any one of claims 1 to 12 for constructing a piece of furniture (10, 50, 70)

## Revendications

1. Système de meubles (10, 50, 70) avec au moins deux parties latérales (30, 55) qui peuvent être couplées de manière amovible à au moins un élément porteur (11, 51, 71) du système de meubles (10, 50, 70),
les parties latérales (30, 55) présentant chacune au moins deux éléments enfichables (31, 56) intégrés respectivement dans la partie latérale (30, 55) et l'élément porteur (11, 51, 71) présentant sur au moins un côté au moins deux contre-éléments enfichables (14), de préférence intégrés dans l'élément porteur (11, 51, 71), afin de coupler la partie latérale (30, 55) à l'élément porteur (11, 51, 71), l'élément porteur (11, 51, 71) présentant au moins deux longerons (15, 58) ainsi qu'un revêtement de couverture (13, 53) et/ou des entretoises (17, 59), le revêtement (13, 53) et/ou les entretoises (17, 59) reliant les longerons (15)les dimensions de l'élément porteur (11, 51, 71) et des parties latérales (30, 55), en particulier la position des éléments enfichables (31, 56) et des contre-éléments enfichables (14), sont choisies de telle sorte que, lors du montage conforme d'une partie latérale (30, 55) sur l'élément porteur (11, 51, 71), la face supérieure de l'élément porteur (11, 51, 71) est alignée avec la face supérieure de la partie latérale (30, 55).

2. Système de meubles selon la revendication 1, dans lequel les éléments enfichables (31, 56) et/ou les contre-éléments enfichables (14) comprennent chacun des pattes d'en-fichage (31, 56) et/ou des ouvertures d'enfichage (14) dans lesquelles les pattes d'enfich-age (31, 56) peuvent être enfichées,
de préférence les parties latérales (30, 55) présentant chacune au moins deux pattes d'enfichage (31, 56) en tant qu'éléments d'enfichage (31, 56) et l'élément porteur (11, 51, 71) présentant sur au moins un côté au moins deux ouvertures d'enfichage (14) en tant qu'éléments d'enfichage opposés (14), pour l'enfichage des deux pattes d'enfichage (31, 56) d'une partie latérale (30, 55), de préférence une ouverture d'enfichage (14) étant formée par une extrémité ouverte d'un tube creux (15, 58).

3. Système de meubles selon la revendication 2, dans lequel au moins respectivement une partie d'un contour intérieur des ouvertures d'enfichage (14), en particulier l'extrémité ouverte des tubes creux (15, 58), est adaptée respectivement à au moins une partie des contours extérieurs d'un élément d'enfichage (31, 56), en particulier d'une patte d'enfich-age (31, 56), et les positions et l'orientation des éléments d'enfichage (31, 56) et des ouvertures d'enfichage (14) sont choisies les unes par rapport aux autres de telle sorte que les éléments d'enfichage (31, 56) peuvent être enfichés de manière ajustée dans les ouvertures d'enfichage (14),
et/ou
des éléments de fixation (20), de préférence des éléments de serrage (20), étant disposés sur les ouvertures d'enfichage(14), en particulier sur les tubes creux (15, 58), afin de fixer de manière amovible, de préférence de serrer, les éléments d'insertion (31, 56), en particulier les pattes d'insertion (31, 56), dans les ouvertures d'enfichage (14).

4. Système d'ameublement selon l'une quelconque des revendications précédentes,
les longerons (15, 58) présentant chacun sur au moins un côté frontal (27) l'une des ouvertures d'enfichage (14) et/ou les longerons (15, 58) comprenant des tubes creux (15, 58).

5. Système de meubles, en particulier selon l'une des revendications précédentes, comprenant au moins deux parties latérales (30, 55, 75) qui peuvent être couplées de manière amovible à au moins un élément porteur (11, 51, 71) du système de meubles (10, 50, 70), les parties latérales (30, 55, 75) comprenant chacune deux pieds (30a, 55a) réglables en hauteur,
les pieds (30a, 55a) comprenant chacun de préférence un tube télescopique avec un tube creux de pied supérieur (32) et une partie de pied inférieure (35, 57) pouvant y être déplacée et fixée.

6. Système de meubles selon la revendication 5, dans lequel les dimensions extérieures des parties de pied (35) sont inférieures aux dimensions intérieures des tubes creux de pied (32), et les parties de pied (35) sont guidées à une distance (d) des parois intérieures des tubes creux de pied (32) au moyen d'un élément d'écartement (39),
de préférence les tubes creux de jambe (32) et les parties de pied (35) étant respectivement conçus comme des tubes carrés et de manière particulièrement préférée l'élément d'écartement (39) comprenant une plaque d'écartement (39).

7. Système de meubles selon l'une quelconque des revendications précédentes, dans lequel la partie latérale (30, 55, 75) comprend un profilé tubulaire en forme de U (49) ouvert vers le bas, de préférence les branches du U du profilé tubulaire en forme de U (49) formant les tubes creux de jambe (32).

8. Système de meubles selon la revendication 7, dans lequel les éléments enfichables (31, 56), en particulier les pattes enfichables (31, 56), de préférence dans la zone des coins du profilé tubulaire en forme de U (49), sont disposés sur la partie latérale (30, 55, 75) de telle sorte qu'ils sont perpendiculaires à un plan dans lequel s'étend le profilé tubulaire en forme de U (49).

9. Système de meubles selon l'une des revendications précédentes, dans lequel les éléments enfichables (31, 56), en particulier les pattes enfichables (31, 56), sont soudés aux parties latérales (30, 55, 75), de préférence avec une section de patte enfichable (31a) soudée dans la partie latérale (30, 55, 75).

10. Système d'ameublement selon l'une quelconque des revendications précédentes, comprenant des éléments de liaison (98, 99) pour relier deux éléments de support (11, 51, 71),
les éléments de liaison (99) comprenant de préférence au moins une partie centrale (99) qui présente sur deux côtés opposés des éléments enfichables (31), en particulier des pattes enfichables (31), respectivement pour l'accouplement avec un élément porteur (11, 51, 71),
et/ou
dans lequel les éléments de connexion (98) comprennent, de préférence, des éléments de connexion enfichables (98), en particulier des pattes de connexion enfichables (98).

11. Système de meubles selon l'une des revendications précédentes, comprenant au moins un dossier (60, 80) pouvant être couplé de manière amovible à l'élément porteur (51, 71), le dossier (60, 80) comprenant de préférence une surface d'appui (65, 85) et au moins deux entretoises transversales (63, 83) qui s'étendent chacune à une extrémité au-delà de la surface d'appui (65, 85) et présentent chacune un élément de couplage (61) pour le couplage avec un élément porteur (51, 71) du système de meubles (50, 70).

12. Système de meubles selon l'une des revendications précédentes, comprenant au moins une rambarde (29) pouvant être couplée de manière amovible à l'élément porteur (11, 51, 71).

13. Meuble (10, 50, 70) qui est constitué d'un système de meubles (10, 50, 70) selon l'une des revendications 1 à 12, le meuble (10, 50, 70) étant de préférence un meuble de jardin (10, 50, 70), de manière particulièrement préférée l'un des meubles (10, 50, 70) suivants :
- une table (10),
- un siège (70, 50), en particulier un banc (70) ou une chaise (50),
- une étagère,
- un sideboard,
- une armoire.

14. Ensemble de meubles (100), en particulier ensemble de meubles de jardin (100), comprenant une pluralité de pièces de meubles (10, 50, 70) selon la revendication 13.

15. Procédé de construction d'un meuble (10, 50, 70), comprenant au moins les étapes consistant à :
- Fournir un système d'ameublement (10, 50, 70) selon l'une quelconque des revendications 1 à 12
- Couplage de deux parties latérales (30, 55, 75) du système de meubles (10, 50, 70) avec au moins un élément porteur (11, 51, 71) du système de meubles (10, 50, 70), au moins deux éléments enfichables (31, 56) d'une partie latérale (30, 55, 75), intégrés chacun dans la partie latérale (30, 55, 75), étant respectivement couplés à des éléments enfichables complémentaires (14), de préférence intégrés dans l'élément porteur (11, 51, 71), sur un côté de l'élément porteur (11, 51, 71).

16. Utilisation d'un système d'ameublement (10, 50, 70) selon l'une des revendications 1 à 12 pour la construction d'un meuble (10, 50, 70)
